# EUROPÄISCHE PATENTSCHRIFT

(11) **EP 3 583 586 B1**
(45) Veröffentlichungstag und Bekanntmachung des Hinweises auf die Patenterteilung: **04.11.2020**
(21) Anmeldenummer: 18707273.1
(22) Anmeldetag: 12.02.2018
(51) Int. Cl.: G05D 1/02, B60T 7/00, B60W 30/09, B60W 30/095, B60W 30/14, B60W 30/16, B60W 50/00, G06K 9/00, B65G 63/00

(54) **AUTOMATISCH GEFÜHRTES TRANSPORTFAHRZEUG FÜR CONTAINER UND VERFAHREN ZUM BETREIBEN DESSELBEN SOWIE SYSTEM MIT EINEM AUTOMATISCH GEFÜHRTEN TRANSPORTFAHRZEUG**
AUTOMATICALLY GUIDED TRANSPORT VEHICLE FOR CONTAINERS AND METHOD FOR OPERATING THE SAME AND SYSTEM WITH AN AUTOMATICALLY GUIDED TRANSPORT VEHICLE
VEHICULE DE TRANSPORT A GUIDAGE AUTOMATIQUE POUR CONTENEURS ET SON PROCEDE DE FONCTIONNEMENT ET SYSTEME AVEC UN VEHICULE DE TRANSPORT A GUIDAGE AUTOMATIQUE

(30) Priorität: 15.02.2017 DE 102017103097
(43) Veröffentlichungstag der Anmeldung: 25.12.2019
(73) Patentinhaber: Konecranes Global Corporation, 05830 Hyvinkää (FI)
(72) Erfinder: WIESCHEMANN, Armin, 46119 Oberhausen (DE); ALDEJOHANN, Stefan, 40764 Langenfeld (DE); SCHULZ, Heiko, 51381 Leverkusen (DE); SCHMIDT-EWIG, Jan, 45131 Essen (DE); EICHNER, Heinz, 40878 Ratingen (DE)
(74) Vertreter: Moser Götze & Partner Patentanwälte mbB
(86) Internationale Anmeldenummer: PCT/EP2018/053443
(87) Internationale Veröffentlichungsnummer: WO 2018/149789

(56) Entgegenhaltungen:
- US-A1- 2007 282 530
- US-A1- 2010 057 361
- US-A1- 2013 236 279
- US-A1- 2015 187 217

## Beschreibung

Die Erfindung betrifft ein Transportfahrzeug für Container gemäß dem Oberbegriff von Anspruch 1, ein Verfahren zum Betreiben eines Transportfahrzeugs für Container gemäß dem Oberbegriff von Anspruch 8 sowie ein System gemäß dem Oberbegriff von Anspruch 14.

Transportfahrzeuge im Sinne der vorliegenden Erfindung sind als Schwerlastfahrzeuge ausgebildete Flurförderfahrzeuge, die für die Handhabung und/oder den Transport von Containern ausgelegt sind. Die zu transportierenden beziehungsweise handzuhabenden Container können dementsprechend insbesondere im Fall von ISO-Containern im beladenen Zustand bis zu 40 t wiegen und normierte oder zumindest standardisierte Längen von zum Beispiel 10, 20, 40, 45, 53 oder 60 Fuß aufweisen. Die beiden letztgenannten Längen werden bisher als nicht ISO genormte Container ausschließlich in Nordamerika eingesetzt. In diesem Zusammenhang werden unter ISO-Containern genormte Großraumbeziehungsweise Seefrachtcontainer verstanden, die im internationalen Warenverkehr zum Einsatz kommen. In diesem Zusammenhang können Container auch andere normierte oder zumindest standardisierte Ladungsträger wie beispielsweise Wechselaufbauten, insbesondere Wechselbehälter oder Wechselbrücken, sein.

Entsprechende Transportfahrzeuge können auch Teil eines Terminals, beispielsweise eines Hafenterminals, sein. Hierbei sind die Transportfahrzeuge in den Umschlag von Containern zwischen mindestens zwei Transportmitteln gleicher oder unterschiedlicher Art eingebunden, beispielsweise zwischen Schiffen, Straßen-und/oder Schienenfahrzeugen. Dementsprechend erfolgt ein Be- und Entladen von Schiffen, und/oder Schienenfahrzeugen sowie entsprechender Transportfahrzeuge. In diesem Zusammenhang transportieren die nicht schienengebunden, sondern frei verfahrbaren Transportfahrzeuge die Container beispielsweise auf der Wasserseite eines Containerlagers des Terminals zwischen dem Containerlager und einer Containerbrücke zum Löschen beziehungsweise Beladen eines am Kai anliegenden Schiffs mit Containern. In den Terminals kann daher auch ein entsprechend kombinierter Verkehr zwischen Wasser, Straße und/oder Schiene stattfinden.

Zu Transportfahrzeugen im Sinne der vorliegenden Erfindung zählen damit insbesondere Spezialfahrzeuge, die als interne Transportfahrzeuge nur innerbetrieblich innerhalb solcher Terminals betrieben werden und in der Regel nicht für einen externen Einsatz im öffentlichen Verkehr vorgesehen und ausgelegt beziehungsweise zugelassen sind. Diese Transportfahrzeuge sind daher strikt vom öffentlichen Verkehr getrennt zu betreiben. Als ein möglicher Fahrzeugtyp solcher Transportfahrzeuge werden beispielsweise spezielle Containertransportfahrzeuge eingesetzt, die eine von zueinander beabstandeten Führungselementen begrenzte Ladefläche aufweisen. Die Führungselemente werden auch als Einweiser bezeichnet und führen einen aufzunehmenden Container beziehungsweise dessen Eckbeschläge auf die Ladefläche. Hierfür erstrecken sich die Führungselemente mit ihren Führungsflächen schräg nach außen und oben von der Ladefläche weg. Die Ladefläche kann hierbei auch als Teil einer heb- und senkbaren Hubplattform ausgebildet sein. Derartige Containertransportfahrzeuge sind beispielsweise aus der EP 2 637 954 B1 bekannt.

Auch eine als Terminal Truck oder Terminal Tractor bezeichnete Zugmaschine kann für sich genommenen oder zusammen mit einem oder mehreren Anhängern als eine Art Sattelzug einen Fahrzeugtyp von internen Transportfahrzeugen im Sinne der vorliegenden Erfindung bilden. Deren Ladefläche für die Aufnahme der Ladungsträger ist dann nicht wie bei den vorgenannten speziellen Containertransportfahrzeugen an der Zugmaschine selbst, sondern jeweils an dem oder den Anhängern vorgesehen und kann ebenfalls wie oben beschrieben von Führungselementen begrenzt sein. Derartige Transportfahrzeuge sind beispielsweise aus DE 10 2012 108 768 A1 bekannt.

Auch Portalhubgeräte stellen einen Fahrzeugtyp von internen Transportfahrzeugen im Sinne der vorliegenden Erfindung dar. Diese Transportfahrzeuge sind beispielsweise in der EP 2 694 424 B1 beschrieben. Derartige Portalhubgeräte, die auch Portalhubstapelwagen, Portalstapelwagen, Straddle Carrier, Van Carrier, Shuttle Carrier oder Runner genannt werden, werden nicht nur als Transportfahrzeug für einen Containertransport im Horizontalverkehr, sondern insbesondere auch als spezielle Umschlaggeräte für ISO-Container eingesetzt. Mit Hilfe einer Hubvorrichtung und einem als Spreader bezeichneten Lastaufnahmemittel können Portalhubgeräte Container anheben und nach einem Transport an einem Zielort abstellen. Da die Portalhubgeräte einen spinnenbeinartigen Aufbau aufweisen, können diese einen auf dem Boden oder auf einem anderen Container ruhenden Container überfahren und hierbei zusätzlich je nach Bauweise auch einen angehobenen Container transportieren. Je nach Bauhöhe werden die Portalhubgeräte beispielsweise als 1 über 3-Geräte, 1 über 2-Geräte usw. bezeichnet. Ein 1 über 3-Gerät kann einen Container auf 3 gestapelte Container absetzen, den obersten von 4 gestapelten Containern aufnehmen oder 3 gestapelte Container mit einem aufgenommenen Container überfahren.

Die vorgenannten internen Transportfahrzeuge können manuell geführt werden und dementsprechend insbesondere beim Beschleunigen, Bremsen und Lenken von üblicherweise mitfahrenden Fahrern aktiv manuell gesteuert werden. Hierfür weisen manuell geführte Transportfahrzeuge eine entsprechende Fahrzeugsteuerung und üblicherweise auch eine Fahrerkabine auf, aus der zum manuellen Führen ein manuelles Eingreifen in die Fahrzeugsteuerung erfolgen kann. Alternativ können die internen Transportfahrzeuge auch automatisch geführt sein und dementsprechend insbesondere beim Beschleunigen, Bremsen und Lenken im Sinne so genannter Automated Guided Vehicles (AGV) automatisiert gesteuert werden. Hierfür weisen automatisch geführte Transportfahrzeuge eine geeignete Fahrzeugsteuerung auf, so dass aufgrund der hierüber erfolgenden automatischen Steuerung beziehungsweise Navigation kein aktives manuelles Eingreifen eines mitfahrenden Fahrers erforderlich oder möglich ist. In diesem Sinne kann ein automatisch geführtes Transportfahrzeug auch bemannt sein, wenn ein Fahrer mitfährt, hierbei jedoch nicht im Sinne eines Fahrzeugführers aktiv in die Steuerung des Transportfahrzeugs eingreifen muss oder kann. Fahrerlose, aber von einem Fahrzeugführer manuell ferngesteuerte Transportfahrzeuge gelten nicht als automatisch geführte, sondern als manuell geführte Fahrzeuge.

Ebenfalls bekannt sind konventionelle Lkw, insbesondere Sattelzüge, die für den Transport von Containern im öffentlichen Verkehr zugelassen sind und eingesetzt werden. Derartige auch als Road Trucks bezeichnete Fahrzeuge stellen ebenfalls einen Fahrzeugtyp manuell geführter Transportfahrzeuge im Sinne der vorliegenden Erfindung dar. Diese Transportfahrzeuge werden nachfolgend als externe manuell geführte Transportfahrzeuge bezeichnet, da sie auch außerhalb entsprechender Terminals im öffentlichen Verkehr eingesetzt werden können und in der Regel zu einem überwiegenden Anteil im öffentlichen Verkehr eingesetzt werden.

Aus der europäischen Patentschrift EP 2 637 954 B1 ist ein Terminal zum Umschlag von Containern bekannt, das als separaten Betriebsbereich einen Automatik-Bereich und einen hiervon über einen Zaun getrennten Manuell-Bereich aufweist. In dem wasserseitig bezüglich eines Containerlagers angeordneten Automatik-Bereich dürfen ausschließlich interne automatisch geführte Containertransportfahrzeuge und weder interne noch externe manuell geführte Containertransportfahrzeuge betrieben werden. Der Automatik-Bereich ist über einen Zaun gegen einen unberechtigten Zutritt von Personen und gegen die Einfahrt von manuell geführten Transportfahrzeugen geschützt.

Die deutsche Offenlegungsschrift DE 10 2005 049 159 A1 betrifft führerlose Transportfahrzeuge, die als Teil von führerlosen Transportsystemen insbesondere in Produktionsanlagen eingesetzt werden. Zur Umgebungsauswertung und Kollisionsvermeidung wird ein als Sensorvorrichtung zur Objekterkennung dienender Laserscanner eingesetzt, der Abstandsinformationen zu einem Objekt, welches auch eine Person sein kann, erfasst und in Abhängigkeit von einer Bremscharakteristik und Geschwindigkeit des Transportfahrzeugs einen erlaubten Mindestabstand ermittelt. Dringt das erfasste Objekt in den definierten Mindestabstand ein, so wird ein Bremsvorgang oder in Ausweichmanöver von der Auswerteeinheit veranlasst. Zukünftige Bewegungen des Objektes werden nicht berücksichtigt.

Auch die deutsche Offenlegungsschrift DE 10 2005 054 359 A1 offenbart ein Fahrzeug für fahrerlose Transportsysteme, das mittels eines optischen Sensors das Eindringen eines Objekts oder einer Person in ein Schutzfeld erkennt und darauf zur Kollisionsvermeidung einen Abschaltbefehl erzeugt, durch den das fahrerlose Transportsystem angehalten wird. Je nach Fahrtrichtung oder Geschwindigkeit des Transportsystems kann von mehreren definierten Schutzfeldern ein Schutzfeld ausgewählt werden.

In der deutschen Offenlegungsschrift DE 10 2010 031 038 A1 wird ein Verfahren zur Unterstützung eines Fahrers eines manuell geführten Kraftfahrzeuges beschrieben. Die verwendeten Fahrzeuge sind mit Sensoren zum Erfassen von unbewegten und bewegten Objekten ausgestattet, um den jeweiligen Fahrer dabei zu unterstützen, Kollisionen mit entsprechenden Objekten zu vermeiden. Hierbei erfolgt eine Bestimmung der Relativgeschwindigkeit zwischen dem Fahrzeug und dem erfassten Objekt, sowie eine darauf basierende und die Reaktionszeit des Fahrers berücksichtigende Berechnung des Anhalteweges. Eine Notbremsung wird ausgelöst, sofern der Abstand zwischen Fahrzeug und Objekt den Anhalteweg unterschreitet.

Die deutsche Offenlegungsschrift DE 10 2008 062 916 A1 beschreibt ebenso ein manuell geführtes Fahrzeug und ein Verfahren zur Ermittlung einer Kollisionswahrscheinlichkeit des manuell geführten Fahrzeuges mit Lebewesen. Je nach ermittelter Wahrscheinlichkeit einer Kollision wird beispielsweise eine Warnung an den Fahrer oder eine Notbremsung ausgelöst. Die Fahrzeuge sind hierbei mit einer Sensorik zur Erfassung von Umgebungsinformationen versehen, wobei auch ein physikalisches und physiologisches Bewegungsvermögen des Lebewesens und/oder empirisch ermittelte Verhaltensmuster berücksichtigt werden. Ein Bezug zu automatisch geführten Containerfahrzeugen ist nicht gegeben.

Aus der US 2015/187217 A1 ist ein Kollisionsvermeidungssystem zum Parken beziehungsweise zur Rückwärtsfahrt von manuell geführten Fahrzeugen bekannt. Ein Bezug zu automatisch geführten Containerfahrzeugen ist nicht gegeben.

Aus der US 2010/057361 A1 ist ein Verfahren zum stochastischen Vorhersagen zukünftiger Fahrzeugzustände bekannt. Anhand von Sensormessungen wird ein Bewegungsprofil eines Fahrzeugs erstellt, welches zur Kollisionsvermeidung an andere Fahrzeuge zum Abgleich mit deren Bewegungsprofil übermittelt werden kann.

Der Erfindung liegt die Aufgabe zugrunde, ein verbessertes automatisch geführtes Transportfahrzeug für Container, ein Verfahren zum Betreiben desselben sowie ein System mit einem automatisch geführten Transportfahrzeug bereit zu stellen, das einen besonders sicheren und insbesondere kollisionsfreien Betrieb ermöglicht.

Diese Aufgabe wird durch ein Transportfahrzeug mit den Merkmalen des Anspruchs 1, ein Verfahren mit den Merkmalen des Anspruchs 8 sowie ein System mit den Merkmalen des Anspruchs 14 gelöst. In den abhängigen Ansprüchen 2 bis 7 und 9 bis 13 sind vorteilhafte Ausgestaltungen der Erfindung angegeben.

Ein Transportfahrzeug für Container, das eine Fahrzeugsteuerung aufweist, mittels derer das Transportfahrzeug automatisch führbar ist und mittels derer eine Geschwindigkeit des Transportfahrzeugs steuerbar ist, wird erfindungsgemäß dadurch verbessert, dass das Transportfahrzeug eine Sensorvorrichtung zur Objekterkennung aufweist, die mit der Fahrzeugsteuerung derart zusammenwirkt, dass ein Bewegungsbereich des Transportfahrzeugs ermittelbar ist, innerhalb dessen das Transportfahrzeug mittels eines Bremsvorgangs während einer Bremszeit zum Stillstand kommen kann, und dass ein Bewegungsbereich eines mittels der Sensorvorrichtung erkannten Objekts ermittelbar ist, innerhalb dessen das Objekt während der Bremszeit des Transportfahrzeugs bewegbar ist, so dass die zulässige Geschwindigkeit des Transportfahrzeugs mittels der Fahrzeugsteuerung automatisch reduzierbar ist, so dass sich die beiden Bewegungsbereiche nach der Reduzierung der zulässigen Geschwindigkeit nicht berühren und insbesondere nicht überschneiden. Die Bewegungsbereiche sind hierbei potentiell mögliche und somit theoretische vorausberechnete Bewegungsbereiche.

Der Kerngedanke der vorliegenden Erfindung besteht somit darin, durch die Sensorvorrichtung Objekte in der Umgebung des automatisch geführten Transportfahrzeugs zu erkennen sowie diesbezügliche Informationen zu bestimmen, auszuwerten und für einen kollisionsfreien Betrieb zu nutzen. Die Sensorvorrichtung ist hierfür so ausgebildet, dass als Objekte insbesondere manuell geführte Transportfahrzeuge und/oder automatisch geführte Transportfahrzeuge und/oder Personen und/oder sonstige Objekte wie beispielsweise Bestandteile von Kranen oder ortsfeste Begrenzungen und Lichtmasten, insbesondere jeweils als solches, erkennbar und somit insbesondere voneinander unterscheidbar sind. Die Erkennung beziehungsweise Auswertung kann die Form und/oder Reflexionen des jeweiligen Objekts berücksichtigen. Hierfür ist eine Auswerteeinheit vorgesehen, die Teil der Fahrzeugsteuerung und/oder der Sensorvorrichtung sein kann und in der typische Werte bezüglich Form und/oder Reflexion bekannter Objekte gespeichert und für einen Vergleich im Rahmen der Auswertung bereitgestellt sein können. Die von der Sensorvorrichtung ermittelbaren Informationen können eine Position, Bewegungsrichtung und Geschwindigkeit des Objekts beinhalten, um auf deren Basis die Bewegungsbereiche zu ermitteln. Hierfür kann die Sensorvorrichtung beispielsweise zumindest einen Lasersensor und/oder eine Kamera und/oder einen Radarsensor und/oder einen Ultraschallsensor umfassen. Unter Berücksichtigung der Informationen und/oder kinematisch möglicher Bewegungen beziehungsweise erreichbarer Positionen und der eigenen Geschwindigkeit beziehungsweise minimalen Bremszeit des automatisch geführten Transportfahrzeugs kann prognostiziert werden, ob eine Gefahr für eine Kollision mit dem jeweils erkannten Objekt besteht oder nicht. Sofern eine solche Gefahr besteht, wird die zulässige Geschwindigkeit für das automatisch geführte Transportfahrzeug reduziert oder wenn erforderlich sogar ein Halt eingeleitet. Somit wird in vorteilhafter Weise erreicht, dass ein automatisch geführtes Transportfahrzeug anhalten kann, bevor eine Kollision mit anderen Objekten, z.B. manuell geführten Transportfahrzeugen oder im Fahrbereich anwesenden Personen, entstehen kann. Nach dem Halt kann eine etwaige Kollision nur noch durch eine Bewegung des Objekts selbst verursacht werden, nicht jedoch durch eine Bewegung des automatisch geführten Transportfahrzeugs.

Das automatisch geführte Transportfahrzeug kann mittels der oben erwähnten Sensorvorrichtung auch andere automatisch geführte Transportfahrzeuge erkennen und diese insbesondere untereinander und auch von anderen Objekten, insbesondere von manuell geführten Transportfahrzeugen, unterscheiden. Da bei einem erkannten automatisch geführten Transportfahrzeug dann aber sowohl das erkennende als auch das erkannte Fahrzeug vorgegebene Routen eines Leitsystems befahren und somit eine Kollision durch entsprechende Routenvorgabe ausgeschlossen ist, ist keine Anpassung der Geschwindigkeit erforderlich. Die Geschwindigkeit der automatisch geführten Transportfahrzeuge wird somit nicht automatisch in Folge des Erkennens eines anderen automatisch geführten Transportfahrzeugs reduziert. Nur wenn das erkannte Objekt kein automatisch geführtes Transportfahrzeug ist, kommt also in Abhängigkeit der jeweiligen Bewegungsbereiche eine automatische Reduzierung der Geschwindigkeit des automatisch geführten Transportfahrzeugs in Betracht.

Die Sicherheit wird weiter dadurch erhöht, dass der Bewegungsbereich des erkannten Objekts kinematische Grenzen eines Worst-Case-Manövers des Objekts umfasst beziehungsweise auf deren Basis ermittelbar ist. Hiermit sind die während der Bremszeit durch mögliche Bewegungen des Objekts erreichbaren Positionen des Objekts umfasst. Entsprechende Werte für die kinematischen Grenzen können für diverse Objekte, insbesondere diverse Fahrzeugtypen und Personen, gespeichert und der Fahrzeugsteuerung für eine entsprechende Auswertung und Zuordnung im Rahmen der Ermittlung des Bewegungsbereichs zur Verfügung gestellt werden.

In konstruktiv einfacher Weise ist vorgesehen, dass die Sensorvorrichtung einen Detektionsbereich hat, der so bemessen ist, dass ein Objekt erkennbar ist, bevor sich die Bewegungsbereiche des Transportfahrzeugs und des Objekts berühren. Dies ermöglicht eine besonders frühzeitige Reduzierung der Geschwindigkeit des automatisch geführten Transportfahrzeugs und somit eine weiter erhöhte Sicherheit bei dessen Betrieb in einem Mischverkehr.

In vorteilhafter Weise ist zudem vorgesehen, dass die Fahrzeugsteuerung und die Sensorvorrichtung eingerichtet sind, um die Bewegungsbereiche kontinuierlich zu ermitteln und insbesondere in Abhängigkeit der aktuellen Geschwindigkeit des Transportfahrzeugs anzupassen.

Weiterhin vorteilhaft vorgesehen ist ein System mit einem entsprechenden automatisch geführten Transportfahrzeug, bei dem eine erste Fahrspur für ein manuell geführtes Transportfahrzeug und eine zweite Fahrspur für das automatisch geführte Transportfahrzeug vorgesehen sind und die beiden Fahrspuren über eine Barriere voneinander getrennt sind, um den Bewegungsbereich des manuell geführten Transportfahrzeugs zu begrenzen.

Ein Verfahren zum Betreiben eines Transportfahrzeugs für Container, das eine Fahrzeugsteuerung aufweist, mittels derer das Transportfahrzeug automatisch geführt wird und mittels derer eine Geschwindigkeit des Transportfahrzeugs gesteuert wird, wird dadurch verbessert, dass eine Sensorvorrichtung zur Objekterkennung mit der Fahrzeugsteuerung derart zusammenwirkt, dass ein Bewegungsbereich des Transportfahrzeugs ermittelt wird, innerhalb dessen das Transportfahrzeug mittels eines Bremsvorgangs während einer Bremszeit zum Stillstand kommen kann, und dass ein Bewegungsbereich eines mittels der Sensorvorrichtung erkannten Objekts ermittelt wird, innerhalb dessen das Objekt während der Bremszeit des Transportfahrzeugs bewegbar ist, so dass die zulässige Geschwindigkeit des Transportfahrzeugs mittels der Fahrzeugsteuerung automatisch reduziert wird, so dass sich die beiden Bewegungsbereiche nach der Reduzierung der zulässigen Geschwindigkeit nicht berühren. Dies erhöht die Sicherheit im Betrieb eines entsprechenden Transportfahrzeugs. Im Übrigen gelten die bezüglich des Transportfahrzeugs genannten Vorteile entsprechend für das erfindungsgemäße Verfahren und die nachfolgend wiedergegebenen möglichen Details dieses Verfahrens.

Dementsprechend kann vorteilhaft vorgesehen sein, dass mittels der Sensorvorrichtung als Objekt zumindest ein manuell geführtes Transportfahrzeug und/oder ein automatisch geführtes Transportfahrzeug und/oder eine Person oder auch die genannten sonstigen Objekte, insbesondere jeweils als solches, erkannt und somit insbesondere voneinander unterschieden werden können.

Weiterhin kann vorteilhaft vorgesehen sein, dass mittels der Sensorvorrichtung eine Position, Geschwindigkeit und Bewegungsrichtung des Objekts und anhand dessen der Bewegungsbereich des Objekts ermittelt wird.

Auch kann vorteilhaft der Bewegungsbereich des Objekts auf Basis kinematischer Grenzen eines Worst-Case-Manövers des erkannten Objekts ermittelt werden.

Zudem kann vorteilhaft vorgesehen sein, dass die Sensorvorrichtung einen Detektionsbereich hat, der so bemessen ist, dass ein Objekt erkennbar ist, bevor sich die Bewegungsbereiche des Transportfahrzeugs und des Objekts berühren.

In einer weiteren vorteilhaften Ausgestaltung des Verfahrens ist vorgesehen, dass die Fahrzeugsteuerung und die Sensorvorrichtung eingerichtet sind, um die Bewegungsbereiche kontinuierlich zu ermitteln und insbesondere in Abhängigkeit der aktuellen Geschwindigkeit des Transportfahrzeugs anzupassen.

Ein System mit einem Transportfahrzeug für Container, das eine Fahrzeugsteuerung aufweist, mittels derer das Transportfahrzeug automatisch führbar ist und mittels derer eine Geschwindigkeit des Transportfahrzeugs steuerbar ist, wird erfindungsgemäß dadurch verbessert, dass mindestens eine Sensorvorrichtung zur Objekterkennung vorgesehen ist, die mit der Fahrzeugsteuerung derart zusammenwirkt, dass ein Bewegungsbereich des Transportfahrzeugs ermittelbar ist, innerhalb dessen das Transportfahrzeug mittels eines Bremsvorgangs während einer Bremszeit zum Stillstand kommen kann, und dass ein Bewegungsbereich eines mittels der Sensorvorrichtung erkannten Objekts ermittelbar ist, innerhalb dessen das Objekt während der Bremszeit des Transportfahrzeugs bewegbar ist, so dass die zulässige Geschwindigkeit des Transportfahrzeugs mittels der Fahrzeugsteuerung automatisch reduzierbar ist, so dass sich die beiden Bewegungsbereiche nach der Reduzierung der zulässigen Geschwindigkeit nicht berühren und insbesondere nicht überschneiden. Hierbei kann die Sensorvorrichtung streckenseitig und beispielsweise ortsfest innerhalb eines unten beschriebenen Terminals in schlecht einsehbaren Bereichen, insbesondere Kreuzungsbereichen hinter von Containerstapeln gebildeten Ecken, angeordnet sein und Informationen zu detektierten Objekten an das sich dem Detektionsbereich der Sensorvorrichtung nähernde Transportfahrzeug beziehungsweise die Fahrzeugsteuerung übertragen, um auf diese Weise im Sinne der Erfindung in einen kollisionsfreien Betrieb eingebunden zu werden. Die übrigen Funktionalitäten und das erfindungsgemäße Zusammenwirken zwischen der Fahrzeugsteuerung und der Sensorvorrichtung erfolgen bei einem solchen System analog zu der Variante, bei der die Sensorvorrichtung Bestandteil des Transportfahrzeugs ist und dementsprechend nicht ortsfest ist, sondern mit dem Transportfahrzeug mitbewegt wird. Auch das erfindungsgemäße Verfahren ist zum Betrieb der Transportfahrzeuge geeignet, wenn die Sensorvorrichtung nicht Bestandteil des Transportfahrzeugs ist, sondern außerhalb desselben streckenseitig und insbesondere ortsfest angeordnet ist. Außerdem ist es denkbar, dass bei einem solchen System sowohl am Transportfahrzeug als auch streckenseitig im Terminal jeweils mindestens eine Sensorvorrichtung vorgesehen ist und entsprechend mit der Fahrzeugsteuerung zusammenwirkt. Dies ist vorteilhaft, wenn der Detektionsbereich der am Transportfahrzeug angebrachten Sensorvorrichtung entsprechende schwer einsehbare Bereiche nicht umfasst und dadurch beeinträchtigt ist. Hier wird dann die streckenseitige und insbesondere ortsfeste Sensorvorrichtung eingebunden, um in den entsprechenden Bereichen Objekte zu erkennen und diesbezügliche Informationen an das Transportfahrzeug beziehungsweise die Fahrzeugsteuerung zu übertragen beziehungsweise zur erfindungsgemäßen Ermittlung der Bewegungsbereiche der erkannten Objekte bereitzustellen.

Ein Ausführungsbeispiel der Erfindung wird anhand der nachfolgenden Beschreibung näher erläutert. Es zeigen:
Figur 1 eine schematische Seitenansicht eines automatisch geführten Transportfahrzeugs,
Figur 2 eine schematische Ansicht eines Terminals zum Umschlag von Containern, Figur 2a eine schematische Ansicht eines alternativen Terminals zum Umschlag von Containern,
Figuren 3 und 4 jeweils eine schematische Ansicht eines Mischverkehrs automatisch und manuell geführter Transportfahrzeuge innerhalb des Terminals aus Figur 2 oder 2a,
Figur 5 eine weitere schematische Ansicht eines Mischverkehrs automatisch und manuell geführter Transportfahrzeuge innerhalb des Terminals aus Figur 2 oder 2a, Figuren 6a, 6b, 6c, 6d typische Betriebssituationen innerhalb der Terminals aus Figur 2 beziehungsweise 2a in der Draufsicht.

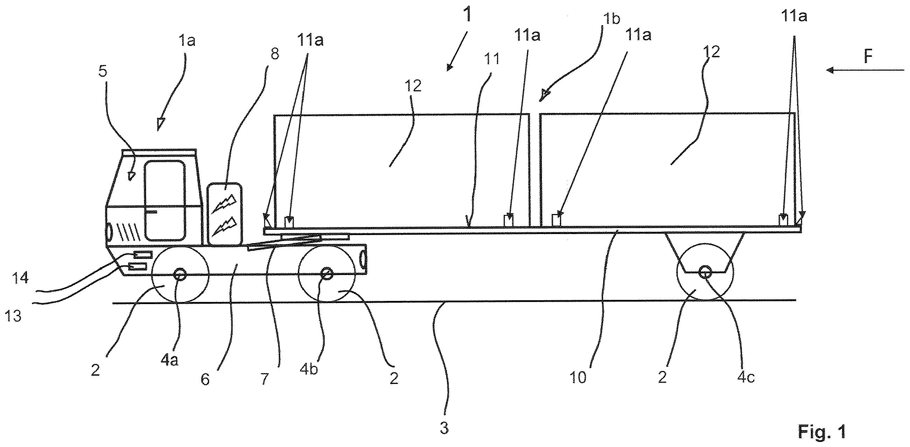

Die Figur 1 zeigt eine schematische Seitenansicht eines automatisch geführten Transportfahrzeugs 1 für Container 12, das in einem Terminal 9 (siehe übrige Figuren) zum Umschlag von Containern 12 eingesetzt wird. Das Transportfahrzeug 1 ist beispielhaft als Sattelzug ausgebildet und umfasst dementsprechend eine auch als Terminal Truck bezeichnete Zugmaschine 1a sowie einen daran angekoppelten Anhänger in Form eines Aufliegers 1b. Derartige Sattelzüge weisen in der Schwerlastausführung ein Gesamtzuggewicht von bis zu 200 t auf. Auch die Zugmaschine 1a für sich genommen und ohne Auflieger 1b stellt ein Transportfahrzeug 1 dar.

Das Transportfahrzeug 1 ist über Räder 2 frei auf einer Flurfläche 3 und damit flurgebunden, jedoch nicht schienengebunden verfahrbar. Dementsprechend ist das Transportfahrzeug 1 von Schienenfahrzeugen zu unterscheiden. Die Räder 2 sind jeweils mit einer Bereifung versehen, die vorzugsweise eine mit Luft befüllte Gummibereifung im Sinne von Pneus ist. Außerdem umfasst das Transportfahrzeug 1 einen Fahrantrieb mit mindestens einem als Elektromotor ausgebildeten Motor und einem Getriebe, um hierüber die Räder 2 anzutreiben. Der Motor und das Getriebe sind zur besseren Übersichtlichkeit nicht dargestellt. Grundsätzlich ist anstelle eines Elektromotors auch ein Verbrennungsmotor denkbar. Die Räder 2 sind in üblicher Weise an zwei Achsen 4a, 4b im Bereich der Zugmaschine 1a angeordnet. Wenn das Transportfahrzeug 1 als Sattelzug ausgebildet ist, sind auch an zumindest einer weiteren dritten Achse 4c an dem Auflieger 1b Räder 2 angeordnet. Grundsätzlich ist es auch möglich, andere Achszahlen und Achsanordnungen mit entsprechender Anzahl von Rädern 2 vorzusehen, wenn dies technisch erforderlich ist.

Das Transportfahrzeug 1 beziehungsweise dessen Zugmaschine 1a umfasst ein Fahrgestell 6, an dem die Räder 2 über die vordere erste Achse 4a und die hintere zweite Achse 4b gelagert sind. Zudem ist im hinteren Bereich des Fahrgestells 6 eine Sattelplatte 7 angeordnet, die Bestandteil einer Sattelkupplung ist. Die Sattelplatte 7 kann über einen hydraulischen Antrieb heb- und senkbar ausgebildet sein, so dass die Zugmaschine 1a den Auflieger 1b aktiv und selbstständig an- beziehungsweise abkuppeln kann. Der hydraulische Hub der Sattelplatte 7 ermöglicht es, Sattellasten bis 45 t anzuheben. Auch ein andersartiges An- und Abkuppeln des Aufliegers 1b ohne hydraulische Hubmöglichkeit ist denkbar, beispielsweise durch einen manuelle betätigbaren Kupplungsmechanismus. Die Sattelplatte 7 kann auch derart gelenkartig ausgebildet sein, dass kein regelmäßiges Trennen von Zugmaschine 1a und Auflieger 1b vorgesehen ist und somit Zugmaschine 1a und Auflieger 1b dauerhaft zu einer festen Einheit in Form eines Sattelzugs verbindet. Außerdem trägt das Fahrgestell 6 eine Batterie 8, die den oder die Elektromotoren des Fahrantriebs des Transportfahrzeugs 1 speist und mit diesem mitbewegt wird. Die Batterie 8 ist vorzugsweise als wiederaufladbare Lithium-Ionen-Batterie oder als Bleibatterie ausgebildet und oberhalb des Fahrgestells 6 oder unterhalb desselben beispielsweise zwischen den beiden Achsen 4a, 4b angeordnet, um einen einfachen Austausch mit einer geladenen Batterie 8 zu ermöglichen. Alternativ kann auch an dem Auflieger 1b eine zusätzliche Batterie 8 zur Speisung des Fahrantriebs angeordnet und hierfür mit dem Fahrantrieb elektrisch verbunden sein.

Der Auflieger 1b weist keine am der Zugmaschine 1a zugewandten Ende angeordnete vordere Achse, sondern nur eine oder mehrere hintere Achsen 4c auf, die am von der Zugmaschine 1a abgewandten Ende unter einem Rahmen 10 des Aufliegers 1b gelagert sind. Eine Art vordere Achse des Aufliegers 1b wird jedoch durch die hintere Achse 4b der Zugmaschine 1a gebildet. Auch weist der Auflieger 1b nicht dargestellte und an seinem der Zugmaschine 1a zugewandten vorderen Ende angeordnete Stützen auf. Die Stützen sind zum Abstellen des Auflegers 1b nach erfolgtem Abkuppeln und je nach Ausgestaltung der Sattelplatte 7 zum Auf- und Absatteln eines Aufliegers 1b an der Zugmaschine 1a vorgesehen. Außerdem weist der Auflieger 1b keinen eigenen Antrieb auf.

Des Weiteren weist das Transportfahrzeug 1 beziehungsweise dessen Auflieger 1b auf seinem Rahmen 10 eine im Wesentlichen ebene Ladefläche 11 für Container 12 auf. In der Figur 1 sind in Fahrtrichtung F einer Vorwärtsfahrt des Transportfahrzeugs 1 gesehen hintereinander zwei als ISO-Container ausgebildete Container 12 mit einer Länge von etwa 20 Fuß abgestellt. ISO-Container im oben definierten Sinne haben genormte Eckbeschläge. Die Eckbeschläge können beispielsweise von dem als so genannter Spreaderrahmen ausgebildeten Lastaufnahmemittel eines Krans ergriffen werden um den ISO-Container von der Ladefläche 11 anzuheben oder auf dieser abzustellen.

Um einen zu transportierenden Container 12 und im Fall von ISO-Containern insbesondere dessen Eckbeschläge beim Absetzen auf der Ladefläche 11 führen und in Bezug auf die Ladefläche 11 ausrichten zu können, wird die Ladefläche 11 an ihren Seiten von mehreren Führungselementen 11a begrenzt. Die Führungselemente 11a weisen hierfür Führungsflächen mit einem schrägen Verlauf auf. Hierbei erstrecken sich die Führungsflächen von der Ladefläche 11 nach oben und außen weg gerichtet und zu der Ladefläche 11 nach unten und innen hin gerichtet. Vorzugsweise sind die Führungselemente 11a paarweise an gegenüberliegenden Seiten, insbesondere Längsseiten und/oder Schmalseiten, der Ladefläche 11 angeordnet. Die Führungsflächen eines Paars von Führungselementen 11a bilden eine Art Trichter, deren schräger Verlauf sich zur Ladefläche 11 hin verjüngt, um die Führungs- und Ausrichtfunktion zu realisieren. Dementsprechend erweitern sich die Führungsflächen eines Paars von Führungselementen 11a von der Ladefläche 11 nach oben weggerichtet.

Das Transportfahrzeug 1 ist im oben definierten Sinne automatisch geführt und weist hierfür eine in Figur 1 schematisch dargestellte Fahrzeugsteuerung 13 auf. Mittels der Fahrzeugsteuerung 13 sind die Fahrmanöver des Transportfahrzeugs 1 automatisch steuerbar, indem beispielsweise über ein Leitsystem geplante Transportaufträge ausgeführt und diesbezüglich vorgegebene Fahrtrouten steuerungstechnisch in entsprechende Fahrmanöver innerhalb unten näher beschriebener Terminals 9 zum Umschlag von Containern 12 umgesetzt werden. In diesem Zusammenhang werden mittels der Fahrzeugsteuerung 13 Lenkvorgänge und Geschwindigkeiten sowie Beschleunigungen des Transportfahrzeugs 1 automatisch gesteuert. Des Weiteren kann das Transportfahrzeug 1 optional von einem Fahrer auch im oben definierten Sinne manuell innerhalb des entsprechenden Terminals 9 geführt beziehungsweise gesteuert werden, so dass auch ein Wechsel zwischen manueller und automatischer Führung des Transportfahrzeugs 1 denkbar ist. Für die manuelle Variante ist im vorderen Bereich der Zugmaschine 1a eine Fahrerkabine 5 mit entsprechenden Steuerungsmitteln für einen manuellen Eingriff in die Fahrzeugsteuerung 13 angeordnet. Bei ausschließlich automatisch geführten Transportfahrzeugen 1 kann die Fahrerkabine 5 wie in Figur 1 dargestellt fahrerlos bleiben oder auch weggelassen werden.

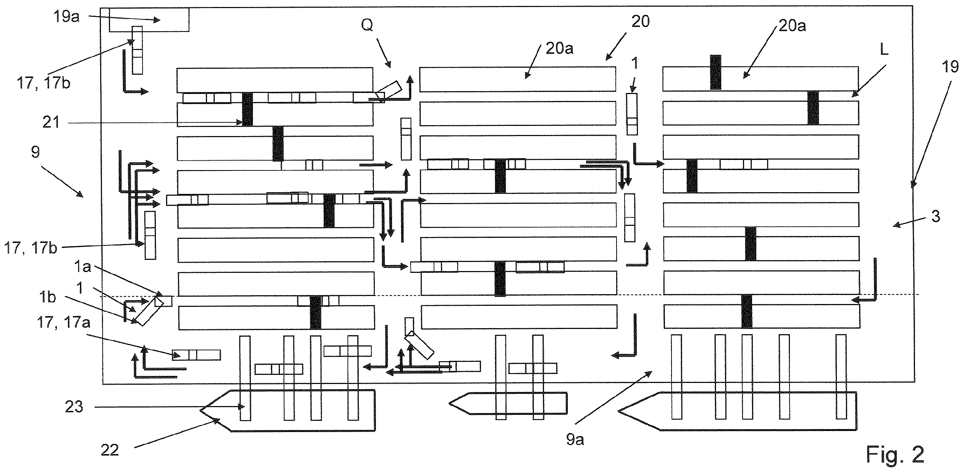

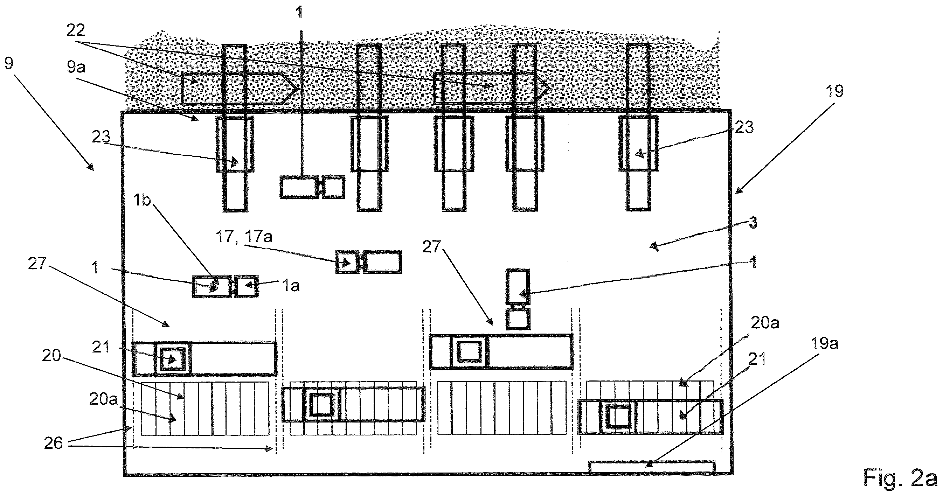

Die Figur 2 zeigt eine schematische Ansicht eines Terminals 9 zum Umschlag von Containern 12 in der Draufsicht. Das Terminal 9 ist beispielhaft als Hafenterminal ausgebildet. Hierbei können an einem Kai 9a eines Hafens mehrere Schiffe 22 anlegen, um Container 12 anzuliefern oder abzuholen. Für das Beladen beziehungsweise Löschen der Schiffe 22 sind an dem Kai 9a Containerbrücken 23 vorgesehen, die auch als Ship-to-Shore Krane (kurz: STS-Kran) bezeichnet werden und deren Ausleger sich einerseits über die Schiffe 22 und andererseits über den Kai 9a erstrecken. Alternativ kann das Beladen beziehungsweise Löschen der Schiffe 22 auch über so genannte Hafenkrane erfolgen, deren Ausleger hierbei um eine vertikale Achse über das entsprechende Schiff 22 verschwenkt wird.

Das Terminal 9 ist in üblicher Weise von einer beispielsweise als Zaun oder Mauer ausgebildeten Begrenzung 19 umgeben und hierüber von seiner äußeren Umgebung und vom öffentlichen Verkehr außerhalb des Terminals 9 getrennt. Zudem umfasst das Terminal 9 innerhalb der Begrenzung 19 ein Containerlager 20, in dem Container 12 zur kurzzeitigen Zwischenlagerung in mindestens einem auch als Stack bezeichneten Lagerbereich 20a gestapelt werden können. Dies kann der Fall sein, nachdem die Container 12 von den Schiffen 22 abgeladen wurden und bevor sie für den weiteren Transport außerhalb des Terminals 9 auf ein Straßen- oder Schienenfahrzeug geladen oder nachdem sie hiervon angeliefert wurden und bevor sie auf die Schiffe 22 geladen werden.

Üblicher Weise sind in einem derartigen Terminal 9 mehrere Lagerbereiche 20a vorgesehen, die jeweils reihenförmig beziehungsweise rasterartig nebeneinander und voneinander beabstandet angeordnet sind. In jedem Lagerbereich 20a können mehrere, beispielsweise zehn, Reihen von Containern mit ihren Längsseiten nebeneinander und je Reihe mehrere, beispielsweise sechs Container 12, übereinander abgestellt werden. Zum Bewirtschaften des Containerlagers 20 beziehungsweise der jeweiligen Lagerbereiche 20a, das heißt zum dortigen Ein- und Auslagern von Containern 12, ist mindestens ein als Portalkran 21 ausgebildeter Stapelkran vorgesehen. Die Umschlaggeräte darstellenden Portalkrane 21 überspannen mit ihren von Portalstützen getragenen Kranträgern den entsprechenden Lagerbereich 20a und die darin gestapelten Container 12. Für das Ein- und Auslagern von Containern 12 können die Portalkrane 21 über den Lagerbereich 20a in dessen Längsrichtung hinweg verfahren.

Innerhalb des Terminals 9 erfolgt zum Transport von Containern 12 ein gemeinsamer und gleichzeitiger Betrieb von mindestens einem automatisch geführten Transportfahrzeug 1, das im Sinne der obigen Definition ein internes Fahrzeug ist, und mindestens einem manuell geführten Transportfahrzeug, das ebenfalls ein internes Fahrzeug in Form eines internen manuell geführten Transportfahrzeugs 17a oder im Sinne der obigen Definition ein externes Fahrzeug in Form eines externen manuell geführten Transportfahrzeugs 17b wie beispielsweise ein für den öffentlichen Straßenverkehr zugelassener konventioneller Lkw oder Sattelzug sein kann. Interne manuell geführte Transportfahrzeuge 17a entsprechen der manuellen Variante des in Figur 1 beschriebenen Transportfahrzeugs 1 mit Fahrerkabine 5. In dem Terminal 9 ist also ein Mischverkehr automatisch geführter Transportfahrzeuge 1 und manuell geführter Transportfahrzeuge 17a, 17b möglich. Mittels der internen Fahrzeuge erfolgt ein Transport der Container 12 zwischen dem Containerlager 20 beziehungsweise dessen Umschlaggeräten und den am Kai 9a angeordneten Umschlaggeräten in Form der Containerbrücken 23 oder Hafenkrane, mit denen die Container 12 zwischen den Transportfahrzeugen 1 beziehungsweise 17a und den Schiffen 22 umgeschlagen und dementsprechend die Transportfahrzeuge 1 und 17a am Kai 9a be- und entladen werden können. Mittels der externen manuell geführten Fahrzeuge 17b können Container vom Containerlager 20 beziehungsweise dessen Umschlaggerät für den weiteren Transport im öffentlichen Verkehr abgeholt oder nach einem Transport im öffentlichen Verkehr zur Zwischenlagerung im Containerlager 20 angeliefert werden. Diese Transporte erfolgen jeweils in einem so genannten Horizontalverkehr.

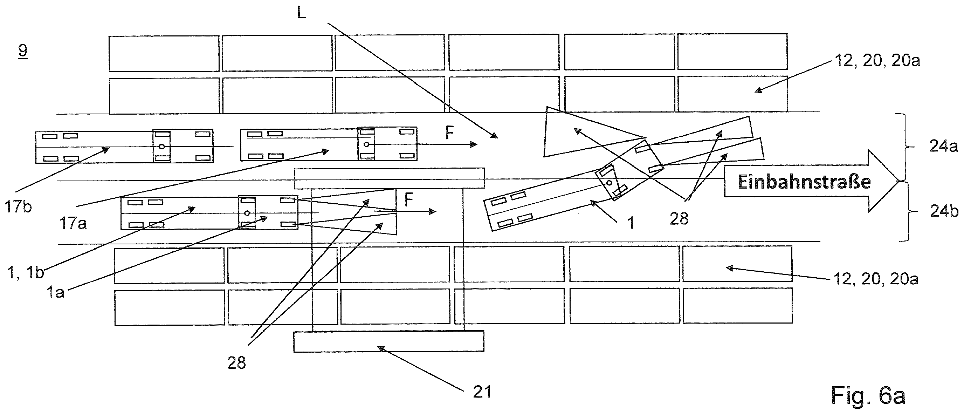

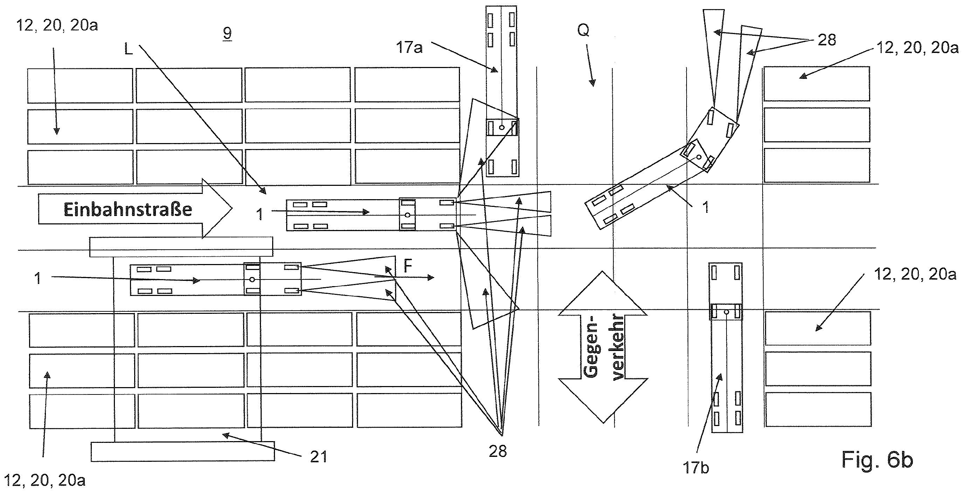

Die den Lagerbereichen 20a als Umschlaggeräte zugeordneten Portalkrane 21 sind in Figur 2 als so genannte gummibereifte Stapelkrane (Rubber-Tyred Gantry Crane - kurz: RTG) oder schienengebundene Stapelkrane (Rail-Mounted Gantry Crane - kurz: RMG) ausgebildet, die entweder von einer in einer Krankabine mitfahrenden Bedienperson manuell geführt beziehungsweise gesteuert werden oder (teil-)automatisiert geführt beziehungsweise gesteuert werden. Dementsprechend wird das in Figur 2 schematisch dargestellte Terminal 9 auch als RMG- beziehungsweise RTG-Terminal bezeichnet. Bei diesem Terminaltyp sind zwischen den sich parallel zum Rand des verlaufenden Kais 9a erstreckenden Lagerbereichen 20a geradlinige und rasterförmig angeordnete Gassen vorgesehenen, in denen die internen Transportfahrzeuge 1 und die internen oder externen Transportfahrzeuge 17a, 17b im Rahmen des Mischverkehrs auf gemeinsamen und/oder jeweils zugewiesenen Fahrspuren verkehren (siehe die übrigen Figuren). Das Beladen und Entladen der Transportfahrzeuge 1 und 17a, 17b durch die Portalkrane 21 erfolgt in den entlang der Längsseiten führenden Längsgassen L der Lagerbereiche 20a (siehe auch Figuren 6a und 6b). Dort sind als Übergabespuren dienende Fahrspuren für die Transportfahrzeuge 1 und 17a, 17b vorgesehen, die von dem jeweiligen Portalkran 21 ebenfalls überspannt werden. Über quer und insbesondere senkrecht zum Kai 9a verlaufende Quergassen Q beziehungsweise deren Fahrspuren können die Transportfahrzeuge 1 und 17a, 17b die Längsgassen L anfahren. Auch kann vorgesehen sein, dass die Portalkrane 21 mehrere in Längsrichtung benachbarte Lagerbereiche 20a, die durch eine Quergasse Q voneinander beabstandet sind, bewirtschaften und hierfür eine oder mehrere Quergassen Q überfahren. Alternativ kann jedem Lagerbereich 20a mindestens ein Portalkran 21 zugeordnet sein. Der Bereich des Kais 9a mit den dortigen Umschlaggeräten ist jedoch den internen Fahrzeugen 1 und 17a vorbehalten, weshalb entsprechende Barrieren oder Passierbereiche mit Sicherheitsschleusen innerhalb des Terminals 9 vorgesehen sein können (gestrichelte Linie in Figur 2). Dadurch erfolgt innerhalb des Terminals 9 im Bereich des Kais 9a ebenfalls zumindest ein Mischverkehr zwischen automatisch geführten Transportfahrzeugen 1 und manuell geführten Transportfahrzeugen 17a.

In Figur 2a ist ein alternatives Terminal 9 dargestellt, das als so genanntes ASC-Terminal ausgebildet ist. Anders als bei dem in Figur 2 dargestellten Terminal 9 sind die Portalkrane 21 hier als so genannte automatisierte Stapelkrane (Automated Stacking Crane - kurz: ASC) ausgebildet. Bei diesem Terminaltyp sind zwischen den Lagerbereichen 20a üblicherweise keine Gassen für die Transportfahrzeuge 1 und 17a, 17b vorgesehen, sondern lediglich für Schienenbahnen 26, auf denen die ASCs verfahren und zwischen deren paarweiser Anordnung jeweils ein Lagerbereich 20a angeordnet ist. Anders als bei RMG- beziehungsweise RTG-Terminals erstrecken sich die Lagerbereiche 20a auch nicht entlang und insbesondere parallel, sondern quer und insbesondere senkrecht zum Kai 20a. Auch die Portalkrane 21 verfahren dementsprechend üblicherweise quer zum Kai 9a. Des Weiteren weist das Containerlager 20 eines ASC-Terminals keine an den Längsseiten der Lagerbereiche 20a angeordneten Übergabespuren auf. Stattdessen sind an den in Längsrichtung weisenden Längsenden des jeweiligen Lagerbereichs 20a kopfseitige Übergabebereiche 27 vorgesehen. In Figur 2a sind nur die kaiseitigen, jedoch keine landseitigen Übergabebereiche 27 und auch keine externen Transportfahrzeuge 17b dargestellt. Durch die vorbeschriebene Ausgestaltung des Containerlagers 20 eines ASC-Terminals wird der bezüglich des Containerlagers 20 wasserseitige beziehungsweise kaiseitige Verkehr interner Fahrzeuge 1 und 17a durch das Containerlager 20 von landseitigem Verkehr externer Fahrzeuge 17b getrennt. Am wasserseitigen Mischverkehr zwischen automatisch geführten Transportfahrzeugen 1 und manuell geführten Transportfahrzeugen 17a sind dementsprechend nur interne Fahrzeuge beteiligt. Im bezüglich des Containerlagers 20 landseitigen Bereich können auch interne manuell geführte Transportfahrzeuge 17a im Mischverkehr mit externen manuell geführten Transportfahrzeugen 17b eingesetzt werden, um beispielsweise eine Anbindung eines Bahnterminals sicherzustellen.

Die Begrenzung 19 des jeweiligen Terminals 9 weist mindestens einen Passierbereich 19a für die externen manuell geführten Transportfahrzeuge 17b auf, so dass diese vom öffentlichen Verkehr außerhalb des Terminals 9 kommend nur durch den Passierbereich in das Terminal 9 hinein beziehungsweise von dort zurück in den öffentlichen Verkehr hinaus fahren können. Zum gezielten beziehungsweise kontrollierten Öffnen und Schließen jedes Passierbereichs 19a kann auch jeweils eine Sicherheitsschleuse zum An- und Abmelden einschließlich einer Identifikation der ein-und ausfahrenden externen Fahrzeuge und deren Fahrer vorgesehen sein. Die internen Fahrzeuge 1, 17a dürfen nicht durch den Passierbereich 19a fahren, da sie nicht in den öffentlichen Verkehr außerhalb des Terminals 9 gelangen dürfen und auch nur innerhalb des Terminals 9 bestimmungsgemäß betrieben werden können. Hiervon ausgenommen ist ein Verlassen des landseitigen Bereichs beziehungsweise des Terminals 9 beispielsweise für Wartungs- oder Reparaturzwecke, was nicht als bestimmungsgemäßer Betrieb gilt.

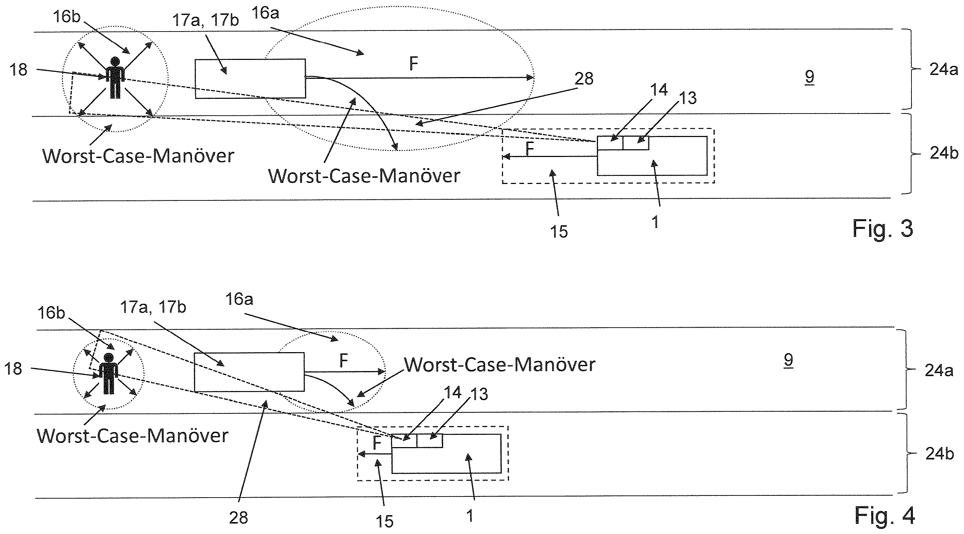

Die Figuren 3 und 4 zeigen jeweils eine schematische Ansicht eines Mischverkehrs automatisch und manuell geführter Transportfahrzeuge 1 und 17a, 17b innerhalb des Terminals 9 aus Figur 2 oder 2a. Beispielhaft dargestellt ist eine Draufsicht auf zwei parallele und benachbarte Fahrspuren 24a und 24b, von denen die erste Fahrspur 24a für das manuell geführte Transportfahrzeug 17a, 17b und die zweite Fahrspur 24b für das automatisch geführte Transportfahrzeug 1 vorgesehen ist. Innerhalb des Terminals 9 sind üblicher Weise weitere Fahrspuren für die internen automatisch geführten Transportfahrzeuge 1 und die internen und/oder externen manuell geführten Transportfahrzeuge 17a, 17b vorgesehen, die parallel zueinander oder sich kreuzend verlaufen können (siehe auch Figuren 6a bis 6d). Außerdem ist beispielhaft eine Person 18 im Bereich der ersten Fahrspur 24a und somit in der Nähe des Fahrbereichs des Transportfahrzeugs 1 dargestellt, so dass eine Kollision insbesondere mit automatisch geführten Transportfahrzeugen 1 droht, da nicht bekannt ist, wie sich im Bereich der Fahrspuren 24a, 24b aufhaltende Personen 18 als nächstes verhalten und bewegen werden. Obwohl Personen 18 ein Betreten des Bereichs der Fahrspuren 24a, 24b aus Sicherheitsgründen untersagt ist, kann dies aufgrund von Fehlverhalten oder in Notfallsituationen vorkommen.

Auch im Rahmen des Mischverkehrs innerhalb des Terminals 9 drohen Kollisionen zwischen automatisch geführten und manuell geführten Transportfahrzeugen 1 und 17a, 17b. Die automatisch geführten Transportfahrzeuge 1 erhalten von dem Leitsystem ihre Fahrtrouten und werden dementsprechend automatisch innerhalb der zugewiesenen Fahrspuren 24b geführt. Da das Leitsystem die Fahrtrouten der gesamten Flotte automatisch geführter Transportfahrzeuge 1 kennt, kann das Leitsystem auch sämtliche Bewegungen der automatischen Transportfahrzeuge 1 kollisionsfrei koordinieren. Demgegenüber ist allerdings nicht bekannt, wie sich in einem Mischverkehr manuell geführte Transportfahrzeuge 17a, 17b beziehungsweise deren Fahrer als nächstes verhalten und bewegen werden. Zwar erhalten auch die manuell geführten Fahrzeuge 17a, 17b von dem Leitsystem vorgegebene Fahrtouten innerhalb der zugewiesenen Fahrspuren 24a, die dem Fahrer beispielsweise grafisch oder akustisch vorgegeben werden können. Es ist jedoch immer möglich, dass ein Fahrer mit seinem manuell geführten Transportfahrzeug 17a, 17b von der vorgegebenen Fahrtroute abkommt, die zugewiesene Fahrspur 24a verlässt und auf die benachbarte Fahrspur 24b wechselt oder sonstige Vorgaben ignoriert. Auch können sich automatisch und manuell geführte Transportfahrzeuge 1, 17a, 17b in Kreuzungsbereichen der Fahrspuren 24a, 24b begegnen, so dass Kollisionen drohen, wenn sich die Fahrer nicht an die Vorgaben des Leitsystems halten.

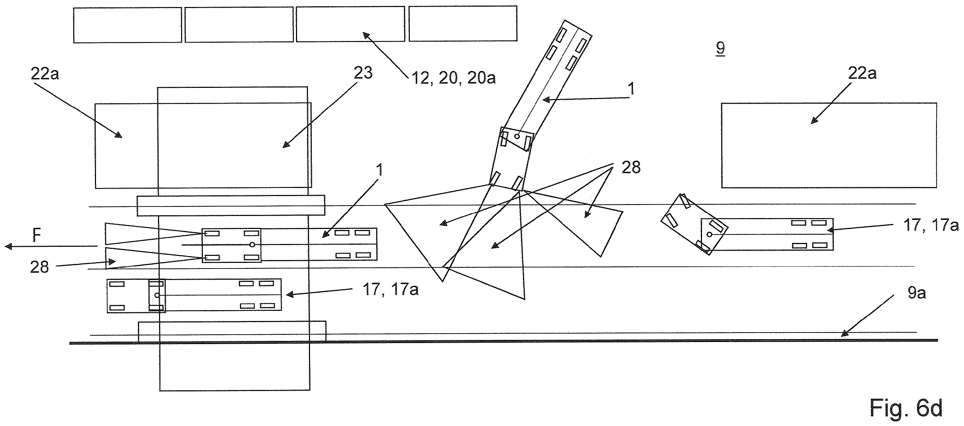

Angesichts dieser Unsicherheit ist bei einem Mischverkehr zwischen automatisch geführten Transportfahrzeugen 1 und manuell geführten Transportfahrzeugen 17a, 17b beziehungsweise im Betrieb des Transportfahrzeugs 1 auch bei Anwesenheit einer Person 18 in der Nähe des Fahrbereichs des Transportfahrzeugs 1 das Risiko von Kollisionen zu minimieren. Zu diesem Zweck weisen die automatisch geführten Transportfahrzeuge 1 jeweils eine Sensorvorrichtung 14 zur Objekterkennung auf. Mittels der Sensorvorrichtung 14 können Objekte in Form von manuell geführten Transportfahrzeugen 17a, 17b oder Personen 18 erkannt werden, die sich im Bereich der Fahrspuren 24a, 24b aufhalten. Selbstverständlich ist die Sensorvorrichtung 14 auch in der Lage, als Objekte andere automatisch geführte Transportfahrzeuge 1 zu erkennen und von anderen Objekten, insbesondere von manuell geführten Transportfahrzeugen 17a, 17b sowie von Personen 18, zu unterscheiden. Hierbei kann die Sensorvorrichtung 14 beispielsweise auf Basis der Form und/oder der Reflexion des jeweiligen Objekts erkennen, ob es sich bei dem erkannten Objekt um ein Transportfahrzeug 17a, 17b, 1, eine Person 18 oder ein sonstiges Objekt wie beispielsweise Bestandteile von Umschlaggeräten wie die Stützen und Fahrwerke von Portalkranen 21 (siehe Figuren 6a und 6b) oder Containerbrücken 23 und in deren Bereich auf dem Kai 9a während des Löschens der Schiffe 22 abgelegte und auch als Hatchcover bezeichnete Ladelukenabdeckungen 22a (siehe Figur 6d) sowie ortsfeste Begrenzungen und Lichtmasten handelt. Auch eine Position, Bewegungsrichtung und/oder Geschwindigkeit des erkannten Objekts lässt sich mittels der Sensorvorrichtung 14 ermitteln. Die ermittelte Position kann ein Abstand zu dem ermittelnden Transportfahrzeug 1 sein. Die Sensorvorrichtung 14 kann hierfür beispielsweise einen Lasersensor und/oder eine Kamera und/oder einen Radarsensor und/oder einen Ultraschallsensor umfassen und über eine Auswerteeinheit die vorgenannten Informationen an die Fahrzeugsteuerung 13 übermitteln, so dass eine Art Umfeldmodell des Transportfahrzeugs 1 vorliegt.

Zur Vermeidung von Kollisionen wirkt die Fahrzeugsteuerung 13 wie nachfolgend beschrieben derart mit der Sensorvorrichtung 14 zusammen, dass für die vorgenannten erkannten Objekte einige oder alle möglichen Bewegungen berücksichtigt werden, die innerhalb der Bremszeit des automatisch geführten Transportfahrzeugs 1 möglich sind. Die Bremszeit umfasst hierbei die minimale Zeit, die einschließlich der Reaktionszeit der Fahrzeugsteuerung 13 benötigt würde, um einen Bremsvorgang einzuleiten und das Transportfahrzeug 1 hierüber kontrolliert zum Stillstand zu bringen. Die somit theoretische beziehungsweise rechnerische Bremszeit hängt insbesondere von der aktuellen Geschwindigkeit des Transportfahrzeugs 1 ab und wird kontinuierlich ermittelt. Außerdem wird ein Bewegungsbereich 15 des automatisch geführten Transportfahrzeugs 1 ermittelt, innerhalb dessen das Transportfahrzeug 1 mittels eines Bremsvorgangs während der Bremszeit zum Stillstand kommen könnte. Der Bewegungsbereich 15 umfasst damit sämtliche Positionen, die von dem Transportfahrzeug 1 im Falle eines Bremsvorgangs mit und/oder ohne Kurvenfahrt bis zum Stillstand erreicht werden können. Da die Fahrtroute des automatisch geführten Transportfahrzeugs 1 vorgegeben und bekannt ist, lässt sich die Geometrie von dessen Bewegungsbereich 15 in Abhängigkeit der Bremszeit, des Bremswegs und der Fahrzeugabmessungen zuverlässig bestimmen. Die Ermittlung des Bewegungsbereichs 15 kann insbesondere kontinuierlich mittels der Fahrzeugsteuerung 13 erfolgen, da dieser die Werte der aktuellen Geschwindigkeit und damit auch der Bremszeit zur Verfügung gestellt werden können und somit eine kontinuierliche rechnerische Anpassung des Bewegungsbereichs 15 erfolgen kann.

Des Weiteren lässt sich auch für die von der Sensorvorrichtung 14 erkannten Objekte, also beispielsweise ein manuell geführtes Transportfahrzeug 17a, 17b beziehungsweise eine Person 18 oder ein anderes automatisch geführtes Transportfahrzeug 1, ein Bewegungsbereich 16a beziehungsweise 16b ermitteln. Der Bewegungsbereich 16a beziehungsweise 16b des jeweiligen erkannten Objekts ist derjenige Bereich, innerhalb dessen das Objekt während der theoretischen beziehungsweise rechnerischen Bremszeit des erkennenden Transportfahrzeugs 1 noch bewegbar ist. Mit anderen Worten umfasst der Bewegungsbereich 16a beziehungsweise 16b sämtliche Positionen, die das jeweilige Objekt nach seiner Erkennung durch die Sensorvorrichtung 14 bis zum Ablauf der Bremszeit noch erreichen könnte. Die Ermittlung der Bewegungsbereiche 16a beziehungsweise 16b basiert hierfür auf der beispielsweise mittels der Sensorvorrichtung 14 ermittelten Position des jeweils erkannten Objekts. Bei der Ermittlung des Bewegungsbereichs 16a beziehungsweise 16b können zudem die mittels der Sensorvorrichtung 14 kontinuierlich bestimmten aktuellen Bewegungsrichtungen in Fahrtrichtung F und Geschwindigkeiten berücksichtigt werden. Zur Vereinfachung können alternativ auch kinematische Grenzen von Worst-Case-Fahrmanövern beziehungsweise Worst-Case-Bewegungsmanövern wie mögliche maximale Geschwindigkeiten und/oder Beschleunigungen und Änderungen der Bewegungsrichtung beziehungsweise Fahrtrichtung F berücksichtigt werden. Dies ist durch entsprechende Pfeile innerhalb der Bewegungsbereiche 16a, 16b dargestellt. Wenn als Objekt beispielsweise eine Person 18 erkannt worden ist, die sich selbst bewegt, so kann diese maximal die kinematischen Daten erbringen, die ein Weltrekord-Sprinter erbringen kann. Es ist nicht davon auszugehen, dass sich ein Mensch selbsttätig aus eigener Kraft mit 50 km/h über das Terminal bewegt, da dies physikalisch beziehungsweise biomechanisch nicht möglich ist. Entsprechende Annahmen lassen sich auch für Transportfahrzeuge 17a, 17b treffen, da beispielsweise deren maximal realisierbaren Geschwindigkeiten und Beschleunigungen oder Richtungsänderungen bekannt sind und beispielsweise in der Fahrzeugsteuerung 13 oder der Sensorvorrichtung 14 beziehungsweise deren Auswerteeinheit gespeichert und somit für die Bestimmung der Bewegungsbereiche 16a, 16b zur Verfügung gestellt werden können. Bei einer Berücksichtigung kinematischer Grenzen von Worst-Case-Manövern des jeweiligen Objekts kann vereinfachend angenommen werden, dass die Bewegungsbereiche 16a, 16b ansonsten nur von Parametern des automatisch geführten Transportfahrzeugs 1 abhängen, insbesondere von dessen aktueller Geschwindigkeit in der Fahrtrichtung F beziehungsweise der zugehörigen minimalen Bremszeit.

Die Ermittlung der schematisch gestrichelt beziehungsweise gepunktet dargestellten Bewegungsbereiche 15, 16a, 16b basiert somit auf einer Bestimmung kinematischer Grenzen des Transportfahrzeugs 1 und des jeweiligen Objekts. Wenn das erkannte Objekt als nicht bewegbares und somit stationäres Objekt erkannt wird, entspricht der Bewegungsbereich des Objekts der Außenkontur des Objekts.

Das Zusammenwirken der Fahrzeugsteuerung 13 mit der Sensorvorrichtung 14 erfolgt des Weiteren derart, dass durch einen steuerungstechnischen Eingriff in die Fahrzeugsteuerung 13 die zulässige Geschwindigkeit des automatisch geführten Transportfahrzeugs 1 automatisch verringert wird, so dass sich der Bewegungsbereich 15 des Transportfahrzeugs 1 und der Bewegungsbereich 16a eines manuell geführten Transportfahrzeugs 17a, 17b beziehungsweise der Bewegungsbereich 16b einer Person 18 nach der Reduzierung der zulässigen und/oder tatsächlichen Geschwindigkeit nicht berühren und insbesondere nicht überschneiden. In diesem Zusammenhang kann die zulässige Geschwindigkeit zunächst als Sollwert für die Fahrzeugsteuerung 13 angepasst werden, der die tatsächliche Geschwindigkeit im Sinne eines Istwerts entsprechend folgt beziehungsweise die ein Beschleunigen über die zulässige Geschwindigkeit hinaus verhindert.

Vorzugsweise ist vorgesehen, dass die zulässige Geschwindigkeit des Transportfahrzeugs 1 bereits reduziert wird, bevor sich die Bewegungsbereiche 15 und 16a beziehungsweise 16b berühren und somit zwischen diesen wie in den Figuren 3 und 4 angedeutet ein Abstand erhalten bleibt. Dies setzt voraus, dass der Detektionsbereich 28 der Sensorvorrichtung 14, innerhalb dessen eine Objekterkennung möglich ist, entsprechend groß und nicht beeinträchtigt ist. Eine Beeinträchtigung des Detektionsbereichs 28 kann beispielsweise in schlecht einsehbaren Kreuzungsbereichen von Fahrspuren zwischen Containerstapeln und hiervon gebildeten Ecken vorliegen. Hier kann erfindungsgemäß auch mindestens eine Sensorvorrichtung 14 streckenseitig und somit ortsfest außerhalb des Transportfahrzeugs 1 angebracht sein und Informationen zu detektierten Objekten an das Transportfahrzeug 1 übertragen, um auf diese Weise im Sinne der Erfindung in einen kollisionsfreien Betrieb eingebunden zu werden. Bei kleineren oder hinreichend großen, aber beeinträchtigten Detektionsbereichen 28 ist auch eine kurzzeitige Berührung oder Überschneidung der Bewegungsbereiche 15 und 16a beziehungsweise 16b möglich. Hier kann es passieren, dass im Moment des Eintritts in den Detektionsbereich 28 und der erfolgenden Erkennung durch die Sensorvorrichtung 14 das entsprechende Objekt so nah im Bereich des Transportfahrzeugs 1 ist, dass eine Berührung oder Überschneidung der Bewegungsbereiche 15 und 16a beziehungsweise 16b bereits vorliegt. Der Detektionsbereich 28 der Sensorvorrichtung 14 ist jedoch mindestens so bemessen, dass auf freier Fläche ohne Beeinträchtigung des Detektionsbereichs 28 ein Objekt erkannt werden kann, bevor es sich innerhalb des Bewegungsbereichs 15 des automatisch geführten Transportfahrzeugs 1 befindet. Der Bewegungsbereich 15 des automatisch geführten Transportfahrzeugs 1 kann somit durch die Verringerung der Geschwindigkeit frei von erkannten Objekten gehalten werden. Die Verringerung der zulässigen Geschwindigkeit des Transportfahrzeugs 1 führt zudem zu einer Verringerung der Bremszeit und damit einhergehend zu einer Verkleinerung der Bewegungsbereiche 15 und 16a beziehungsweise 16b. Dies wird durch einen Vergleich der Figuren 3 und 4 deutlich, da in Figur 4 das Transportfahrzeug 1 im Vergleich zu Figur 3 bereits eine geringere Geschwindigkeit und das manuell geführte Transportfahrzeug 17a, 17b beziehungsweise die Person 18 eine unveränderte Geschwindigkeit hat. In Figur 3 sind als beispielhafte Werte für das Transportfahrzeug 1 eine Geschwindigkeit von 10 m/s, eine minimale Bremszeit einschließlich Reaktionszeit im oben definierten Sinne von 3s und ein entsprechender minimaler Bremsweg von 10m jeweils in Fahrtrichtung F denkbar. In Figur 4 betragen die entsprechenden Werte beispielsweise 2 m/s, 1s und 1m. Trotz des in Figur 4 gegenüber Figur 3 verringerten Abstands zwischen dem automatisch geführten Transportfahrzeug 1 und dem manuell geführten Transportfahrzeug 17a, 17b sowie der Person 18 wurde durch die Verringerung der zulässigen und tatsächlichen Geschwindigkeit des Transportfahrzeugs 1 eine Verkleinerung der Bewegungsbereiche 15 und 16a beziehungsweise 16b erreicht und damit einhergehend eine Berührung der Bewegungsbereiche 15 und 16a beziehungsweise 16b verhindert. Die in den Figuren 3 und 4 dargestellten Situationen sind daher insofern unkritisch, als das Transportfahrzeug 1 auch bei Worst-Case-Manövern noch stoppen kann, so dass anschließend eine Kollision nur noch durch eine Bewegung des Transportfahrzeugs 17a beziehungsweise 17b oder der Person 18 verursacht werden kann. Eine Kollision von automatisch geführten Transportfahrzeugen 1 untereinander ist durch deren über das Leitsystem erfolgende Koordination ausgeschlossen.

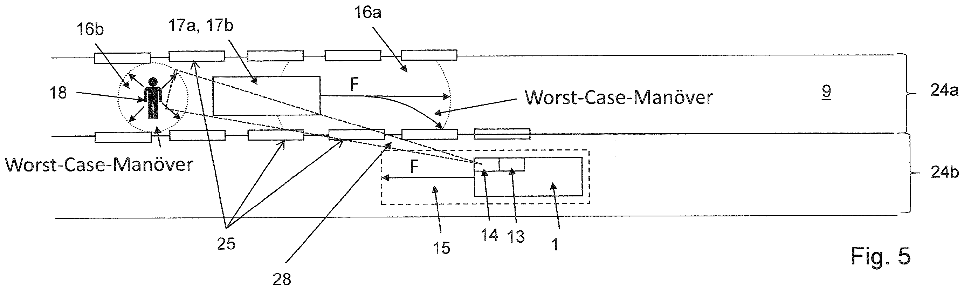

In Figur 5 ist eine weitere schematische Ansicht eines Mischverkehrs automatisch und manuell geführter Transportfahrzeuge 1 und 17a, 17b innerhalb des Terminals 9 aus Figur 2 oder 2a gezeigt. Die Ansicht unterscheidet sich von den Figuren 3 und 4 dadurch, dass die erste Fahrspur 24a durch als Barriere dienende beabstandete Leitelemente 25 begrenzt ist, wodurch auch eine Trennung von der zweiten Fahrspur 24b erreicht wird. Die Leitelemente 25 verhindern somit ein Ausscheren des manuell geführten Transportfahrzeugs 17a, 17b von der ersten Fahrspur 24a auf die zweite Fahrspur 24b. Die Leitelemente 25 können auch als Barriere für Personen 18 dienen. Anstelle von Leitelementen 25 ist als Barriere auch eine durchgehende Mauer oder Einzäunung denkbar. Wie in Figur 5 angedeutet ist, kann das Vorhandensein entsprechender Barrieren von der Sensorvorrichtung 14 des automatisch geführten Transportfahrzeugs 1 erkannt und bei der Ermittlung des Bewegungsbereichs 16a des manuell geführten Transportfahrzeugs 17a, 17b beziehungsweise des Bewegungsbereichs 16b der Person 18 berücksichtigt werden, indem der jeweilige Bewegungsbereich 16a beziehungsweise 16b entsprechend verkleinert wird und keinen Eingriff in die Fahrzeugsteuerung 13 zur Verringerung der zulässigen beziehungsweise tatsächlichen Geschwindigkeit des Transportfahrzeugs 1 verursacht. Durch entsprechende Barrieren kann also trotz der räumlichen Nähe von Personen 18 oder manuell geführten Transportfahrzeuge 17a, 17b ein ungestörter Betrieb der automatisch geführten Transportfahrzeuge 1 sichergestellt werden. Ohne entsprechende Barrieren wären die ermittelten Bewegungsbereiche 16a, 16b deutlich größer und würden bei gleicher räumlicher Nähe dementsprechend häufiger zu einer Verringerung der zulässigen Geschwindigkeit des Transportfahrzeugs 1 führen.

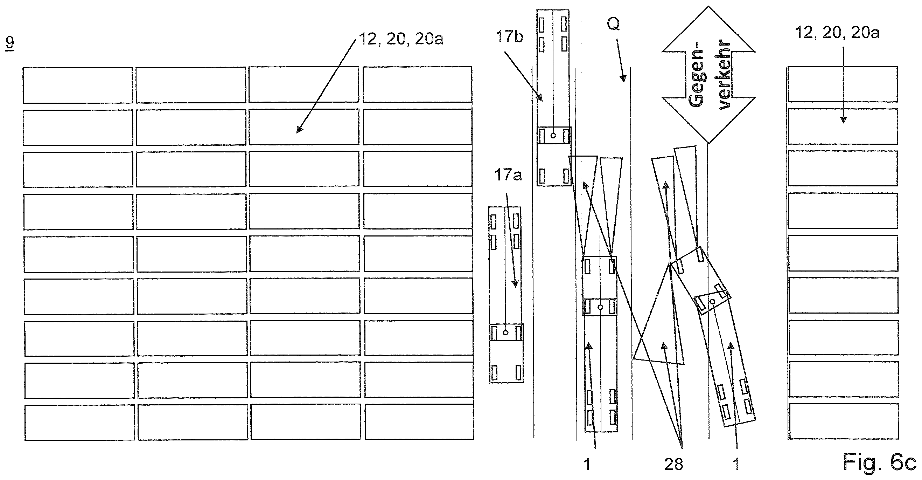

In den Figuren 6a bis 6d sind typische Betriebssituationen dargestellt, die innerhalb der Terminals 9 aus Figur 2 beziehungsweise 2a vorkommen können. Figur 6a zeigt eine Längsgasse L zwischen zwei benachbarten Lagerbereichen 20a, in der eine erste Fahrspur 24a und als Übergabespur eine parallele zweite Fahrspur 24b vorgesehen ist. Beide Fahrspuren 24a, 24b sind als gleichgerichtete Einbahnstraße definiert. Beim Wechsel der Fahrspuren 24a, 24b kommt die Sensorvorrichtung 14 ebenfalls wie oben beschrieben zum Einsatz, um eine Kollision des Transportfahrzeugs 1 mit einem Transportfahrzeug 17a, 17b oder dem Portalkran 21 zu vermeiden. Dies gilt ebenso, wenn automatisch geführte Transportfahrzeuge 1 wie in Figur 6b dargestellt in einen Kreuzungsbereich einer Längsgasse L und einer Quergasse Q einfahren, um diesen für eine Weiterfahrt als Geradeausfahrt in derselben Längsgasse L zu passieren oder in die Quergasse Q abzubiegen. Der mittels der Sensorvorrichtung 14 erkennbare beziehungsweise beobachtbare kreuzende Querverkehr im Rahmen des Mischverkehrs kann auch mehrspuriger Gegenverkehr sein. Derartiger Gegenverkehr, insbesondere entsprechend den Figuren 3 bis 5, ist auch in den Quergassen Q zwischen zwei Kreuzungsbereichen denkbar. Dies ist schematisch in Figur 6c dargestellt. Figur 6d zeigt den Bereich des Kais 9a mit einer Containerbrücke 23, unter dem und zwischen dessen Stützen entsprechender Mischverkehr im Rahmen der Übergabe von Containern 12 erfolgt. Auch hier müssen beim Abbiegen auf die Übergabespuren und der Durchfahrt unter der Containerbrücke 23 Kollisionen unter Einsatz der Sensorvorrichtung 14 vermieden werden. Auch auf dem Kai 9a abgelegte Ladelukenabdeckungen 22a sind in diesem Zusammenhang als Objekte im Sinne zu umfahrender Hindernisse detektierbar.

In den beispielhaft dargestellten Betriebssituationen können Kollisionen mittels der erfindungsgemäßen Einbindung der Sensorvorrichtungen 14 verhindert werden. Zur besseren Übersicht sind in den Figuren 6a bis 6d keine Bewegungsbereiche 15, 16a, 16b dargestellt, sondern lediglich Detektionsbereiche 28. Erkennbar ist, dass mittels der entsprechend am Transportfahrzeug 1 angeordneten Sensorvorrichtungen 14 nicht nur in Fahrtrichtung F vor dem Transportfahrzeug 1 befindliche Objekte detektierbar sind, sondern prinzipiell an jeder Seite des Transportfahrzeugs 1, insbesondere an Front, Heck und Längsseiten. Dadurch kann insbesondere beim Abbiegen oder Wechsel von Fahrspuren auch rückwärtiger Verkehr detektiert und eine Kollision hiermit vermieden werden. Zu diesem Zweck kann an jeder Seite des Transportfahrzeugs 1 eine separate Sensorvorrichtung 14 vorgesehen sein. Auch kann vorgesehen sein, dass sämtliche oder je nach Aufenthaltsort des Transportfahrzeugs 1 nur einige der Sensorvorrichtungen 14 aktiviert sind. Bei einer Geradeausfahrt außerhalb von Kreuzungsbereichen können beispielsweise nur an der Front des Transportfahrzeugs 1 befindliche Sensorvorrichtungen 14 aktiviert sein.

Die Fahrzeugsteuerung 13 und die Sensorvorrichtung 14 bilden ein System zur kontinuierlichen Umgebungsbeobachtung und Umgebungsauswertung sowie darauf basierender Kollisionsvermeidung des automatisch geführten Transportfahrzeugs 1 in den vorliegend beschriebenen Betriebssituationen. Dies ermöglicht einen sicheren koordinierten Mischverkehr von mindestens zwei Transportfahrzeugen 1 und 17a beziehungsweise 17b im obigen beschriebenen Sinne.

Das vorliegend beispielhaft als Terminal Truck ausgebildete Transportfahrzeug 1 kann alternativ auch als Containertransportfahrzeug oder Portalhubgerät im Sinne der obigen Definition ausgebildet sein. Prinzipiell kann die gesamte Flotte der internen Transportfahrzeuge 1, 17a in dem Terminal 9 nur einen der vorgenannten Fahrzeugtypen, also beispielsweise nur Terminal Trucks, oder auch mehrere verschiedene Fahrzeugtypen, also beispielsweise Terminal Trucks und Portalhubgeräte oder Containertransportfahrzeuge und Portalhubgeräte, umfassen.

### Bezugszeichenliste

- 1: Transportfahrzeug
- 1a: Zugmaschine
- 1b: Auflieger
- 2: Rad
- 3: Flurfläche
- 4a: erste Achse
- 4b: zweite Achse
- 4c: dritte Achse
- 5: Fahrerkabine
- 6: Fahrgestell
- 7: Sattelplatte
- 8: Batterie
- 9: Terminal
- 10: Rahmen
- 11: Ladefläche
- 11a: Führungselement
- 12: Container
- 13: Fahrzeugsteuerung
- 14: Sensorvorrichtung
- 15: Bewegungsbereich
- 16a: Bewegungsbereich
- 16b: Bewegungsbereich
- 17a: internes manuell geführtes Transportfahrzeug
- 17b: externes manuell geführtes Transportfahrzeug
- 18: Person
- 19: Begrenzung
- 19a: Passierbereich
- 20: Containerlager
- 20a: Lagerbereich
- 21: Portalkran
- 22: Schiff
- 22a: Ladelukenabdeckung
- 23: Containerbrücke
- 24a: erste Fahrspur
- 24b: zweite Fahrspur
- 25: Leitelement
- 26: Schienenbahn
- 27: Übergabebereich
- 28: Detektionsbereich

- F: Fahrtrichtung
- L: Längsgasse
- Q: Quergasse

## Patentansprüche

1. Transportfahrzeug (1) für Container (12), das eine Fahrzeugsteuerung (13) aufweist, mittels derer das Transportfahrzeug (1) automatisch führbar ist und mittels derer eine Geschwindigkeit des Transportfahrzeugs (1) steuerbar ist, **dadurch gekennzeichnet, dass** das Transportfahrzeug (1) eine Sensorvorrichtung (14) zur Objekterkennung aufweist, die mit der Fahrzeugsteuerung (13) derart zusammenwirkt, dass ein Bewegungsbereich (15) des Transportfahrzeugs (1) ermittelbar ist, innerhalb dessen das Transportfahrzeug (1) mittels eines Bremsvorgangs während einer Bremszeit zum Stillstand kommen kann, und dass ein Bewegungsbereich (15, 16a, 16b) eines mittels der Sensorvorrichtung (14) erkannten Objekts (1, 17a, 17b, 18) ermittelbar ist, innerhalb dessen das Objekt (1, 17a, 17b, 18) während der Bremszeit des Transportfahrzeugs (1) bewegbar ist, so dass die zulässige Geschwindigkeit des Transportfahrzeugs (1) mittels der Fahrzeugsteuerung (13) automatisch reduzierbar ist, so dass sich die beiden Bewegungsbereiche (15, 16a, 16b) nach der Reduzierung der zulässigen Geschwindigkeit nicht berühren.

2. Transportfahrzeug (1) nach Anspruch 1, **dadurch gekennzeichnet, dass** die Sensorvorrichtung (14) so ausgebildet ist, dass als Objekt (1, 17a, 17b, 18) zumindest ein manuell geführtes Transportfahrzeug (17a, 17b) und/oder eine Person (18) und/oder ein automatisch geführtes Transportfahrzeug (1), insbesondere jeweils als solches, erkennbar ist.

3. Transportfahrzeug (1) nach Anspruch 1 oder 2, **dadurch gekennzeichnet, dass** die Sensorvorrichtung (14) so ausgebildet ist, dass eine Position, Geschwindigkeit und Bewegungsrichtung des Objekts (1, 17a, 17b, 18) und anhand dessen der Bewegungsbereich (15, 16a, 16b) des Objekts (1, 17a ,17b, 18) ermittelbar ist.

4. Transportfahrzeug (1) nach einem der Ansprüche 1 bis 3, **dadurch gekennzeichnet, dass** der Bewegungsbereich (15, 16a, 16b) des Objekts (1, 17a, 17b, 18) auf Basis kinematischer Grenzen eines Worst-Case-Manövers des erkannten Objekts (1, 17a, 17b, 18) ermittelbar ist.

5. Transportfahrzeug (1) nach einem der Ansprüche 1 bis 4, **dadurch gekennzeichnet, dass** die Sensorvorrichtung (14) einen Detektionsbereich (28) hat, der so bemessen ist, dass ein Objekt (1, 17a, 17b 18) erkennbar ist, bevor sich die Bewegungsbereiche (15, 16a, 16b) des Transportfahrzeugs (1) und des Objekts (1, 17a, 17b, 18) berühren.

6. Transportfahrzeug (1) nach einem der Ansprüche 1 bis 5, **dadurch gekennzeichnet, dass** die Fahrzeugsteuerung (13) und die Sensorvorrichtung (14) eingerichtet sind, um die Bewegungsbereiche (15, 16a, 16b) kontinuierlich zu ermitteln und insbesondere in Abhängigkeit der aktuellen Geschwindigkeit des Transportfahrzeugs (1) anzupassen.

7. System mit einem automatisch geführten Transportfahrzeug (1) nach einem der vorherigen Ansprüche, **dadurch gekennzeichnet, dass** eine erste Fahrspur (24a) für ein manuell geführtes Transportfahrzeug (17a,17b) und eine zweite Fahrspur (24b) für das automatisch geführte Transportfahrzeug (1) vorgesehen sind und die beiden Fahrspuren (24a, 24b) über eine Barriere voneinander getrennt sind, um den Bewegungsbereich (16a) des manuell geführten Transportfahrzeugs (17a ,17b) zu begrenzen.

8. Verfahren zum Betreiben eines Transportfahrzeugs (1) für Container (12), das eine Fahrzeugsteuerung (13) aufweist, mittels derer das Transportfahrzeug (1) automatisch geführt wird und mittels derer eine Geschwindigkeit des Transportfahrzeugs (1) gesteuert wird, **dadurch gekennzeichnet, dass** eine Sensorvorrichtung (14) zur Objekterkennung mit der Fahrzeugsteuerung (13) derart zusammenwirkt, dass ein Bewegungsbereich (15) des Transportfahrzeugs (1) ermittelt wird, innerhalb dessen das Transportfahrzeug (1) mittels eines Bremsvorgangs während einer Bremszeit zum Stillstand kommen kann, und dass ein Bewegungsbereich (15, 16a, 16b) eines mittels der Sensorvorrichtung (14) erkannten Objekts (1, 17a, 17b, 18) ermittelt wird, innerhalb dessen das Objekt (1, 17a, 17b, 18) während der Bremszeit des Transportfahrzeugs (1) bewegbar ist, so dass die zulässige Geschwindigkeit des Transportfahrzeugs (1) mittels der Fahrzeugsteuerung (13) automatisch reduziert wird, so dass sich die beiden Bewegungsbereiche (15, 16a, 16b) nach der Reduzierung der zulässigen Geschwindigkeit nicht berühren.

9. Verfahren nach Anspruch 8, **dadurch gekennzeichnet, dass** mittels der Sensorvorrichtung (14) als Objekt (1, 17a, 17b, 18) zumindest ein manuell geführtes Transportfahrzeug (17a ,17b) und/oder eine Person (18) und/oder ein automatisch geführtes Transportfahrzeug (1), insbesondere jeweils als solches, erkannt wird.

10. Verfahren nach Anspruch 8 oder 9, **dadurch gekennzeichnet, dass** mittels der Sensorvorrichtung (14) eine Position, Geschwindigkeit und Bewegungsrichtung des Objekts (1, 17a, 17b, 18) und anhand dessen der Bewegungsbereich (15, 16a, 16b) des Objekts (1, 17a, 17b, 18) ermittelt wird.

11. Verfahren nach einem der Ansprüche 8 bis 10, **dadurch gekennzeichnet, dass** der Bewegungsbereich (15, 16a, 16b) des Objekts (1, 17a, 17b 18) auf Basis kinematischer Grenzen eines Worst-Case-Manövers des erkannten Objekts (1, 17a, 17b, 18) ermittelt wird.

12. Verfahren nach einem der Ansprüche 8 bis 11, **dadurch gekennzeichnet, dass** die Sensorvorrichtung (14) einen Detektionsbereich (28) hat, der so bemessen ist, dass ein Objekt (1, 17a, 17b, 18) erkennbar ist, bevor sich die Bewegungsbereiche (15, 16a, 16b) des Transportfahrzeugs (1) und des Objekts (1, 17a, 17b, 18) berühren.

13. Verfahren nach einem der Ansprüche 8 bis 12, **dadurch gekennzeichnet, dass** die Fahrzeugsteuerung (13) und die Sensorvorrichtung (14) eingerichtet sind, um die Bewegungsbereiche (15, 16a, 16b) kontinuierlich zu ermitteln und insbesondere in Abhängigkeit der aktuellen Geschwindigkeit des Transportfahrzeugs (1) anzupassen.

14. System mit einem Transportfahrzeug (1) für Container (12), das eine Fahrzeugsteuerung (13) aufweist, mittels derer das Transportfahrzeug (1) automatisch führbar ist und mittels derer eine Geschwindigkeit des Transportfahrzeugs (1) steuerbar ist, **dadurch gekennzeichnet, dass** eine Sensorvorrichtung (14) zur Objekterkennung vorgesehen ist, die mit der Fahrzeugsteuerung (13) derart zusammenwirkt, dass ein Bewegungsbereich (15) des Transportfahrzeugs (1) ermittelbar ist, innerhalb dessen das Transportfahrzeug (1) mittels eines Bremsvorgangs während einer Bremszeit zum Stillstand kommen kann, und dass ein Bewegungsbereich (15, 16a, 16b) eines mittels der Sensorvorrichtung (14) erkannten Objekts (1, 17a, 17b, 18) ermittelbar ist, innerhalb dessen das Objekt (1, 17a, 17b, 18) während der Bremszeit des Transportfahrzeugs (1) bewegbar ist, so dass die zulässige Geschwindigkeit des Transportfahrzeugs (1) mittels der Fahrzeugsteuerung (13) automatisch reduzierbar ist, so dass sich die beiden Bewegungsbereiche (15, 16a, 16b) nach der Reduzierung der zulässigen Geschwindigkeit nicht berühren.

## Claims

1. Transport vehicle (1) for containers (12) which has a vehicle controller (13), by means of which the transport vehicle (1) can be automatically guided and by means of which a speed of the transport vehicle (1) can be controlled, **characterised in that** the transport vehicle (1) has a sensor apparatus (14) for object recognition which cooperates with the vehicle controller (13) such that it is possible to ascertain a movement area (15) of the transport vehicle (1), within which the transport vehicle (1) can come to a standstill by means of a braking procedure during a braking time, and that it is possible to ascertain a movement area (15, 16a, 16b) of an object (1, 17a, 17b, 18) recognised by means of the sensor apparatus (14), within which the object (1, 17a, 17b, 18) can be moved during the braking time of the transport vehicle (1), and so the permissible speed of the transport vehicle (1) can be reduced automatically by means of the vehicle controller (13), and so the two movement areas (15, 16a, 16b) do not come into contact with one another after the reduction in the permissible speed.

2. Transport vehicle (1) as claimed in claim 1, **characterised in that** the sensor apparatus (14) is designed such that at least one manually guided transport vehicle (17a, 17b) and/or a person (18) and/or an automatically guided transport vehicle (1) can be recognised as an object (1, 17a, 17b, 18), in particular as such in each case.

3. Transport vehicle (1) as claimed in claim 1 or 2, **characterised in that** the sensor apparatus (14) is designed such that a position, speed and movement direction of the object (1, 17a, 17b, 18) and from this the movement area (15, 16a, 16b) of the object (1, 17a, 17b, 18) can be ascertained.

4. Transport vehicle (1) as claimed in any one of claims 1 to 3, **characterised in that** the movement area (15, 16a, 16b) of the object (1, 17a, 17b, 18) can be ascertained on the basis of kinematic limits of a worst-case manoeuvre of the recognised object (1, 17a, 17b, 18).

5. Transport vehicle (1) as claimed in any one claims 1 to 4, **characterised in that** the sensor apparatus (14) has a detection region (28) which is dimensioned such that an object (1, 17a, 17b, 18) can be recognised before the movement areas (15, 16a, 16b) of the transport vehicle (1) and the object (1, 17a, 17b, 18) come into contact with one another.

6. Transport vehicle (1) as claimed in any one of claims 1 to 5, **characterised in that** the vehicle controller (13) and the sensor apparatus (14) are configured to continuously ascertain the movement areas (15, 16a, 16b) and to adapt them in particular in dependence upon the current speed of the transport vehicle (1).

7. System comprising an automatically guided transport vehicle (1) as claimed in any one of the preceding claims, **characterised in that** a first lane (24a) is provided for a manually guided transport vehicle (17a, 17b) and a second lane (24b) is provided for the automatically guided transport vehicle (1) and the two lanes (24a, 24b) are separated from one another by a barrier in order to delimit the movement area (16a) of the manually guided transport vehicle (17a, 17b).

8. Method for operating a transport vehicle (1) for containers (12) which has a vehicle controller (13), by means of which the transport vehicle (1) is automatically guided and by means of which a speed of the transport vehicle (1) is controlled, **characterised in that** a sensor apparatus (14) for object recognition cooperates with the vehicle controller (13) such that a movement area (15) of the transport vehicle (1) is ascertained, within which the transport vehicle (1) can come to a standstill by means of a braking procedure during a braking time, and that a movement area (15, 16a, 16b) of an object (1, 17a, 17b, 18) recognised by means of the sensor apparatus (14) is ascertained, within which the object (1, 17a, 17b, 18) can be moved during the braking time of the transport vehicle (1), and so the permissible speed of the transport vehicle (1) is reduced automatically by means of the vehicle controller (13), and so the two movement areas (15, 16a, 16b) do not come into contact with one another after the reduction in the permissible speed.

9. Method as claimed in claim 8, **characterised in that** by means of the sensor apparatus (14) at least one manually guided transport vehicle (17a, 17b) and/or a person (18) and/or an automatically guided transport vehicle (1) is recognised an object (1, 17a, 17b, 18), in particular as such in each case.

10. Method as claimed in claim 8 or 9, **characterised in that** by means of the sensor apparatus (14) a position, speed and movement direction of the object (1, 17a, 17b, 18) and from this the movement area (15, 16a, 16b) of the object (1, 17a, 17b, 18) is ascertained.

11. Method as claimed in any one of claims 8 to 10, **characterised in that** the movement area (15, 16a, 16b) of the object (1, 17a, 17b, 18) is ascertained on the basis of kinematic limits of a worst-case manoeuvre of the recognised object (1, 17a, 17b, 18).

12. Method as claimed in any one of claims 8 to 11, **characterised in that** the sensor apparatus (14) has a detection region (28) which is dimensioned such that an object (1, 17a, 17b, 18) can be recognised before the movement areas (15, 16a, 16b) of the transport vehicle (1) and the object (1, 17a, 17b, 18) come into contact with one another.

13. Method as claimed in any one of claims 8 to 12, **characterised in that** the vehicle controller (13) and the sensor apparatus (14) are configured to continuously ascertain the movement areas (15, 16a, 16b) and to adapt them in particular in dependence upon the current speed of the transport vehicle (1).

14. System comprising a transport vehicle (1) for containers (12) which has a vehicle controller (13), by means of which the transport vehicle (1) can be automatically guided and by means of which a speed of the transport vehicle (1) can be controlled, **characterised in that** a sensor apparatus (14) for object recognition is provided which cooperates with the vehicle controller (13) such that it is possible to ascertain a movement area (15) of the transport vehicle (1), within which the transport vehicle (1) can come to a standstill by means of a braking procedure during a braking time, and that it is possible to ascertain a movement area (15, 16a, 16b) of an object (1, 17a, 17b, 18) recognised by means of the sensor apparatus (14), within which the object (1, 17a, 17b, 18) can be moved during the braking time of the transport vehicle (1), and so the permissible speed of the transport vehicle (1) can be reduced automatically by means of the vehicle controller (13), and so the two movement areas (15, 16a, 16b) do not come into contact with one another after the reduction in the permissible speed.

## Revendications

1. Véhicule de transport (1) destiné à des conteneurs (12) et comportant une commande de véhicule (13) qui permet de guider automatiquement le véhicule de transport (1) et de commander une vitesse du véhicule de transport (1), **caractérisé en ce que** le véhicule de transport (1) comporte un dispositif de détection (14) qui est destiné à la détection d'objets et qui coopère avec la commande de véhicule (13) de façon à pouvoir déterminer une zone de déplacement (15) du véhicule de transport (1) dans laquelle le véhicule de transport (1) peut s'arrêter au moyen d'un processus de freinage pendant un temps de freinage et **en ce qu'**une zone de déplacement (15, 16a, 16b) d'un objet (1, 17a, 17b, 18) détecté au moyen du dispositif de détection (14) peut être déterminée, dans laquelle l'objet (1, 17a, 17b, 18) peut être déplacé pendant le temps de freinage du véhicule de transport (1) de sorte que la vitesse admissible du véhicule de transport (1) puisse être réduite automatiquement au moyen de la commande de véhicule (13) de sorte que les deux zones de déplacement (15, 16a, 16b) ne se touchent pas après réduction de la vitesse admissible.

2. Véhicule de transport (1) selon la revendication 1, **caractérisé en ce que** le dispositif de détection (14) est conçu de telle sorte qu'au moins un véhicule de transport à guidage manuel (17a, 17b) et/ou une personne (18) et/ou un véhicule de transport à guidage automatique (1), en particulier à chaque fois en tant que tel, puisse être détectés en tant qu'objet (1, 17a, 17b, 18).

3. Véhicule de transport (1) selon la revendication 1 ou 2, **caractérisé en ce que** le dispositif de détection (14) est conçu de telle sorte qu'une position, une vitesse et une direction de déplacement de l'objet (1, 17a, 17b, 18) et, sur cette base, la zone de déplacement (15, 16a, 16b) de l'objet (1, 17a, 17b, 18) puissent être déterminées.

4. Véhicule de transport (1) selon l'une des revendications 1 à 3, **caractérisé en ce que** la zone de déplacement (15, 16a, 16b) de l'objet (1, 17a, 17b, 18) peut être déterminé en fonction de limites cinématiques d'une manoeuvre au pire des cas de l'objet détecté (1, 17a, 17b, 18).

5. Véhicule de transport (1) selon l'une des revendications 1 à 4, **caractérisé en ce que** le dispositif de détection (14) comporte une zone de détection (28) qui est dimensionnée de telle sorte qu'un objet (1, 17a, 17b, 18) puisse être détecté avant que les zones de déplacement (15, 16a, 16b) du véhicule de transport (1) et l'objet (1, 17a, 17b, 18) ne se touchent.

6. Véhicule de transport (1) selon l'une des revendications 1 à 5, **caractérisé en ce que** la commande de véhicule (13) et le dispositif de détection (14) sont conçus pour déterminer en continu les zones de déplacement (15, 16a, 16b) et notamment pour les adapter en fonction de la vitesse actuelle du véhicule de transport (1).

7. Système comprenant un véhicule de transport à guidage automatique (1) selon l'une des revendications précédentes, **caractérisé en ce qu'**une première voie de roulement (24a) est prévue pour un véhicule de transport à guidage manuel (17a, 17b) et une deuxième voie de roulement (24b) est prévue pour le véhicule de transport à guidage automatique (1) et les deux voies de roulement (24a, 24b) sont séparées l'une de l'autre par une barrière afin de limiter la zone de déplacement (16a) du véhicule de transport à guidage manuel (17a, 17b).

8. Procédé de fonctionnement d'un véhicule de transport (1) destiné à des conteneurs (12) et comportant une commande de véhicule (13) qui permet de guider automatiquement le véhicule de transport (1) et de commander une vitesse du véhicule de transport (1), **caractérisé en ce qu'**un dispositif de détection (14) destiné à la détection d'objets coopère avec la commande de véhicule (13) de façon à déterminer une zone de déplacement (15) du véhicule de transport (1) dans laquelle le véhicule de transport (1) peut s'arrêter au moyen d'un processus de freinage pendant un temps de freinage et **en ce qu'**une zone de déplacement (15, 16a, 16b) d'un objet (1, 17a, 17b, 18), détecté au moyen du dispositif de détection (14), est déterminée dans laquelle l'objet (1, 17a, 17b, 18) peut être déplacé pendant le temps de freinage du véhicule de transport (1) de façon à réduire automatiquement la vitesse admissible du véhicule de transport (1) au moyen de la commande de véhicule (13) de sorte que les deux zones de déplacement (15, 16a, 16b) ne se touchent pas après réduction de la vitesse admissible.

9. Procédé selon la revendication 8, **caractérisé en ce qu'**au moins un véhicule de transport à guidage manuel (17a, 17b) et/ou une personne (18) et/ou le véhicule de transport à guidage automatique (1), en particulier à chaque fois en tant que tel, est détecté en tant qu'objet (1, 17a, 17b, 18) au moyen du dispositif de détection (14).

10. Procédé selon la revendication 8 ou 9, **caractérisé en ce qu'**une position, une vitesse et une direction de déplacement de l'objet (1, 17a, 17b, 18) et, en fonction de celles-ci, la zone de déplacement (15, 16a, 16b) de l'objet (1,17a, 17b, 18) sont déterminées au moyen du dispositif de détection (14).

11. Procédé selon l'une des revendications 8 à 10, **caractérisé en ce que** la zone de déplacement (15, 16a, 16b) de l'objet (1, 17a, 17b 18) est déterminée en fonction de limites cinématiques d'une manœuvre au pire cas de l'objet détecté (1, 17a, 17b, 18).

12. Procédé selon l'une des revendications 8 à 11, **caractérisé en ce que** le dispositif de détection (14) comporte une zone de détection (28) qui est dimensionnée de telle sorte qu'un objet (1, 17a, 17b, 18) puisse être détecté avant que les zones de déplacement (15, 16a, 16b) du véhicule de transport (1) et de l'objet (1, 17a, 17b, 18) ne se touchent.

13. Procédé selon l'une des revendications 8 à 12, **caractérisé en ce que** la commande de véhicule (13) et le dispositif de détection (14) sont conçus pour déterminer en continu les zones de déplacement (15, 16a, 16b) et notamment pour les adapter en fonction de la vitesse actuelle du véhicule de transport (1).

14. Système comprenant un véhicule de transport (1) destiné à des conteneurs (12) et comportant une commande de véhicule (13) qui permet de guider automatiquement le véhicule de transport (1) et de commander une vitesse du véhicule de transport (1), **caractérisé en ce qu'**un dispositif de détection (14) destiné à la détection d'objets est prévu qui coopère avec la commande de véhicule (13) de façon à pouvoir déterminer une zone de déplacement (15) du véhicule de transport (1) dans laquelle le véhicule de transport (1) peut s'arrêter au moyen d'un processus de freinage pendant un temps de freinage et **en ce qu'**une zone de déplacement (15, 16a, 16b) d'un objet (1, 17a, 17b, 18), détecté au moyen du dispositif de détection (14), peut être déterminée dans laquelle l'objet (1, 17a, 17b, 18) peut être déplacé pendant le temps de freinage du véhicule de transport (1) de façon à pouvoir réduire automatiquement la vitesse admissible du véhicule de transport (1) au moyen de la commande de véhicule (13) de sorte que les deux zones de déplacement (15, 16a, 16b) ne se touchent après réduction de la vitesse admissible.
